# EUROPEAN PATENT APPLICATION

(11) **EP 4 661 457 A1**
(43) Date of publication of application: **10.12.2025**
(21) Application number: 23922443.9
(22) Date of filing: 30.11.2023
(51) Int. Cl.: H04W 8/26

(54) **COMMUNICATION METHOD AND APPARATUS**

(30) Priority: 16.02.2023 CN 202310140861
(71) Applicant: Huawei Technologies Co., Ltd., Shenzhen, Guangdong 518129 (CN)
(72) Inventor: ZHU, Shichao, Shenzhen, Guangdong 518129 (CN); SUN, Fei, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Epping - Hermann - Fischer
(86) International application number: PCT/CN2023/135451
(87) International publication number: WO 2024/169327

(57) **Abstract**

This application provides a communication method and apparatus, to resolve a conflict between BAP addresses in a migration process of an mIAB-node in an IAB network. The method includes: If a first donor-CU is different from a second donor-CU, a distributed unit DU of a relay node determines to include a BAP address of the relay node in a first message, and to include first identification information of a mobile termination MT of the relay node and/or second identification information of the MT in the first message, where the first donor-CU is a target donor-CU to which the DU of the relay node is to be migrated, the second donor-CU is a donor-CU connected to the MT, and the BAP address is used for communication of the relay node in a topology managed by the second donor-CU. The DU sends the first message to the first donor-CU. According to the method, the identification information of the MT in the first message may be used to distinguish between the BAP address of the relay node and a BAP address of another relay node served by the first donor-CU, so that a conflict between the BAP addresses in a migration process of the relay node is resolved, and communication accuracy is ensured.

## Description

### CROSS-REFERENCE TO RELATED APPLICATIONS

This application claims priority to Chinese Patent Application No. 202310140861.9, filed with the China National Intellectual Property Administration on February 16, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

There are two types of nodes in an integrated access and backhaul (integrated access and backhaul, IAB) network: an IAB-donor (IAB-Donor) and an IAB-node (IAB-node). The IAB-donor may provide an access service for a terminal device, and service data of the terminal device is connected to the IAB-donor by the IAB-node over a wireless backhaul link. The IAB-node includes a mobile termination (mobile termination, MT) and a distributed unit (distributed unit, DU). The IAB-node communicates with a parent node of the IAB-node via the MT. The IAB-node communicates with a child node of the IAB-node via the DU. The child node of the IAB-node may be another IAB-node, or may be a terminal device.

In an existing standard, an IAB-donor-CU needs to know a binding relationship between an IAB-MT and an IAB-DU to set up an entire topology relationship, so as to configure BAP routing, bearer mapping, and the like for an IAB-node. In a network access process of the IAB-node, the IAB-MT first accesses a network through random access and RRC connection, and the IAB-donor-CU then delivers, to the IAB-MT by using an RRC message, a backhaul link configuration related to the IAB-node. In addition, the IAB-donor-CU configures a BAP address for the MT, and the IAB-DU requests, by using an F1 SETUP REQUEST message, the IAB-donor-CU to set up an F1 connection, where the F1 SETUP REQUEST message includes a BAP address of the IAB-node, so that the IAB-donor-CU can determine that a DU that requests to set up an F1 interface in this case and the MT to which the BAP address has been previously allocated belong to a same IAB-node.

However, in a scenario in which a DU of a network node is migrated but an MT is not migrated, a target donor-CU to which the DU is to be migrated and a donor-CU currently connected to the MT are not a same donor-CU, and any two donor-CUs do not negotiate allocation of a BAP address in advance, a BAP address in an F1 SETUP REQUEST message sent by the DU to the target donor-CU is a BAP address allocated, to the IAB-node, by the donor-CU currently connected to the MT. In this case, the BAP address in the F1 SETUP REQUEST message sent by the DU to the target donor-CU may conflict with a BAP address of another IAB-node served by the target donor-CU, resulting in a communication error.

### SUMMARY

This application provides a communication method and apparatus, to resolve a conflict between BAP addresses in a migration process of an mIAB-node in an IAB network.

According to a first aspect, a communication method is provided. The method may be performed by a relay node (for example, an IAB-node) or a chip, a chip system, or a circuit located in the relay node. The method may be implemented by using the following steps: If a first donor-central unit CU is different from a second donor-CU, a distributed unit DU of the relay node determines to include a backhaul adaptation protocol BAP address of the relay node in a first message, and to include first identification information of a mobile termination MT of the relay node and/or second identification information of the MT in the first message, where the first donor-CU is a target donor-CU to which the DU of the relay node is to be migrated, the second donor-CU is a donor-CU connected to the MT, the first message is for requesting to set up an interface connection between the DU and the first donor-CU, and the BAP address is used for communication of the relay node in a topology managed by the second donor-CU; and the first identification information is identification information for identifying the MT at the first donor-CU, and the second identification information is identification information for identifying the MT at the second CU. The DU sends the first message to the first donor-CU.

According to the method, when the target donor-CU to which the DU of the relay node is to be migrated is different from the donor-CU connected to the MT, the DU may determine to include the BAP address and the first identification information of the MT and/or the second identification information of the MT in the first message, to distinguish between the BAP address of the relay node and a BAP address of another relay node served by the first donor-CU, to resolve a conflict between the BAP addresses in a migration process of the relay node, and ensure communication accuracy.

In a possible design, the first message further includes identification information of the DU.

According to this design, after receiving the first message, a CU 1 may determine a correspondence between the DU and the MT based on the identification information of the DU and the first identification information of the MT and/or the second identification information of the MT, so that the CU 1 manages the relay node.

In a possible design, before the DU sends the first message to the first donor-CU, the method further includes: The relay node receives the first identification information and/or the second identification information from the second donor-CU. Alternatively, the relay node receives the first identification information and/or the second identification information from a third donor-CU, where the third donor-CU is a source donor-CU from which the DU is to be migrated, and the third donor-CU and the second donor-CU may be different donor-CUs or a same donor-CU.

In a possible design, that the relay node receives the first identification information and/or the second identification information from the second donor-CU includes: The MT of the relay node receives an RRC message sent by the second donor-CU, where the RRC message includes the first identification information and/or the second identification information.

That the relay node receives the first identification information and/or the second identification information from the third donor-CU includes: The DU of the relay node receives an F1 message sent by the third donor-CU, where the F1 message includes the first identification information and/or the second identification information.

According to the foregoing design, the relay node may obtain the first identification information of the MT and/or the second identification information of the MT in a plurality of manners, to improve data transmission flexibility.

According to a second aspect, a communication method is provided. The method may be performed by a relay node (for example, an IAB-node) or a chip, a chip system, or a circuit located in the relay node. The method may be implemented by using the following steps: If a first donor-central unit CU is different from a second donor-CU, a distributed unit DU of the relay node determines to include identification information of the DU in a first message, and to include first identification information of a mobile termination MT of the relay node and/or second identification information of the MT in the first message, where the first donor-CU is a target donor-CU to which the DU of the relay node is to be migrated, the second donor-CU is a donor-CU connected to the MT, the first message is for requesting to set up an interface connection between the DU and the first donor-CU, and the BAP address is used for communication of the relay node in a topology managed by the second donor-CU; and the first identification information is identification information for identifying the MT at the first donor-CU, and the second identification information is identification information for identifying the MT at the second donor-CU. The DU sends the first message to the first donor-CU.

According to the method, the DU may determine to include the identification information of the DU and the first identification information of the MT and/or the second identification information of the MT in the first message, so that the first donor-CU may determine a correspondence between the DU and the MT based on the identification information of the DU and the identification information of the MT, without depending on the BAP address sent by the DU to the correspondence between the DU and the MT. This is more flexible.

In a possible design, the method further includes: The DU of the relay node determines not to include the backhaul adaptation protocol BAP address of the relay node in the first message.

According to this design, a conflict between BAP addresses can be resolved, and a redundant information element can be removed from the first message, to reduce transmission resource overheads.

In a possible design, before the DU sends the first message to the first donor-CU, the method further includes: The relay node receives the first identification information and/or the second identification information from the second donor-CU. Alternatively, the relay node receives the first identification information and/or the second identification information from a third donor-CU, where the third donor-CU is a source donor-CU from which the DU is to be migrated, and the third donor-CU and the second donor-CU may be different donor-CUs or a same donor-CU.

According to a third aspect, a communication method is provided. The method may be performed by a relay node (for example, an IAB-node) or a chip, a chip system, or a circuit located in the relay node. The method may be implemented by using the following steps: If a first donor-central unit CU is different from a second donor-CU, a distributed unit DU of the relay node determines not to include a backhaul adaptation protocol BAP address of the relay node in a first message, where the first donor-CU is a target donor-CU to which the DU of the relay node is to be migrated, the second donor-CU is a donor-CU connected to a mobile termination MT of the relay node, the first message is for requesting to set up an interface connection between the DU and the first donor-CU, and the BAP address is used for communication of the relay node in a topology managed by the second donor-CU. The DU sends the first message to the first donor-CU.

According to the method, the DU may determine not to include the BAP address in the first message, to resolve a conflict between BAP addresses, and remove a redundant information element from the first message. This reduces transmission resource overheads.

In a possible design, the method further includes: If the first donor-CU is the same as the second donor-CU, the DU determines to include the BAP address of the relay node in the first message.

According to this design, when the first donor-CU is the same as the second donor-CU, a conflict between BAP addresses does not occur. In this case, the DU may determine to include the BAP address in the first message.

According to a fourth aspect, a communication method is provided. The method may be performed by a relay node (for example, an IAB-node) or a chip, a chip system, or a circuit located in the relay node. The method may be implemented by using the following steps: A distributed unit DU of the relay node sends a second message to a first donor-central unit CU, where the second message includes a backhaul adaptation protocol BAP address of the relay node, and the BAP address is used for communication of the relay node in a topology managed by the first donor-CU, where there is an F1 interface connection between the DU of the relay node and the first donor-CU.

According to the method, when the F1 interface already exists between the DU and the first donor-CU, after an MT is migrated to the first CU, the DU may report the BAP address to the first donor-CU by using the second message, so that the first donor-CU may determine a correspondence between the DU and the MT based on the second message, and this helps a CU 1 manage the relay node.

In a possible design, the second message is a configuration update message.

According to a fifth aspect, a communication method is provided. The method may be performed by a donor node (for example, an IAB-donor) or a chip, a chip system, or a circuit located in the donor node. The method may be implemented by using the following steps: A first donor-central unit CU receives a third message sent by a distributed unit DU of a relay node, where the third message includes user location information ULI of a mobile termination MT of the relay node, and the first donor-CU is a donor-CU connected to the DU. The first donor-CU sends a fourth message to a first core network element, where the fourth message includes ULI of UE and indication information indicating the ULI of the MT, the first core network element is a core network element serving the UE, and the UE is UE managed by the DU.

According to the method, the DU may send the ULI of the MT to the first donor-CU, so that the first donor-CU can learn of the ULI of the MT and report, to the first core network element, the indication information indicating the ULI of the MT. This ensures accuracy of location information of the UE.

According to a sixth aspect, a communication method is provided. The method may be performed by a donor node (for example, an IAB-donor) or a chip, a chip system, or a circuit located in the donor node. The method may be implemented by using the following steps: A first donor-central unit CU receives a fifth message sent by a second donor-CU, where the fifth message includes user location information ULI of a mobile termination MT of a relay node, the first donor-CU is a donor-CU connected to the DU, and the second donor-CU is a donor-CU connected to the MT. The first donor-CU sends a fourth message to a first core network element, where the fourth message includes ULI of UE and indication information indicating the ULI of the MT, the first core network element is a core network element serving the UE, and the UE is UE managed by the DU.

In this manner, the second donor-CU may send the ULI of the MT to the first donor-CU, so that the first donor-CU can learn of the ULI of the MT and report, to the first core network element, the indication information indicating the ULI of the MT. This ensures accuracy of location information of the UE.

According to a seventh aspect, a communication method is provided. The method may be performed by a donor node (for example, an IAB-donor) or a chip, a chip system, or a circuit located in the donor node. The method may be implemented by using the following steps: A second donor-central unit CU sends a sixth message to a first donor-CU, where the sixth message includes identification information of a second core network element, the first donor-CU is a donor-CU connected to a distributed unit DU of a relay node, the second donor-CU is a donor-CU connected to a mobile termination MT of the relay node, and the second core network element is a core network element serving the MT. The second donor-CU sends a seventh message to the second core network element, where the seventh message includes indication information indicating user location information ULI of the MT and identification information of a cell managed by the DU.

According to this solution, the second donor-CU sends, to the second core network element once, the seventh message including the indication information indicating the ULI of the MT and the identification information of the cell managed by the DU, so that when the first donor-CU determines that a first core network element serving UE and the second core network element serving the MT are a same core network element, the first donor-CU does not need to report, to the first core network element, the ULI of the MT or the indication information indicating the ULI of the MT. This reduces signaling overheads, and saves communication resources.

In a possible design, before the second donor-CU sends the sixth message to the first donor-CU, the method further includes: The second donor-CU receives an eighth message sent by the MT, where the eighth message includes the identification information of the cell managed by the DU. Alternatively, the second donor-CU receives a ninth message sent by the first donor-CU, where the ninth message includes the identification information of the cell managed by the DU, and the ninth message further includes first identification information of the MT and/or second identification information of the MT, where the first identification information is identification information for identifying the MT at the first donor-CU, and the second identification information is identification information for identifying the MT at the second donor-CU.

According to this design, the second donor-CU may receive the identification information that is of the cell managed by the DU and that is sent by the MT or the first donor-CU, and then the second donor-CU may send, to the second core network element, the identification information of the cell managed by the DU.

In a possible design, the identification information of the cell includes a cell global identifier CGI and/or a tracking area identity TAI.

According to an eighth aspect, a communication method is provided. The method may be performed by a donor node (for example, an IAB-donor) or a chip, a chip system, or a circuit located in the donor node. The method may be implemented by using the following steps: A first donor-central unit CU receives a sixth message sent by a second donor-CU, where the sixth message includes an identifier of a second core network element, the first donor-CU is a donor-CU connected to a distributed unit DU of a relay node, the second donor-CU is a donor-CU connected to a mobile termination MT of the relay node, and the second core network element is a core network element serving the MT. If the second core network element and a first core network element are a same core network element, the first donor-CU determines to include user location information ULI of UE in a tenth message, where the first core network element is a core network element serving the UE, and the UE is UE managed by the DU; or if the second core network element and the first core network element are not the same core network element, the first donor-CU determines to include, in the tenth message, the user location information ULI of the UE and indication information indicating ULI of the MT. The first donor-CU sends the tenth message to the first core network element.

According to this solution, when the first donor-CU determines that the first core network element serving the UE and the second core network element serving the MT are the same core network element, the first donor-CU does not need to report, to the first core network element, the ULI of the MT or the indication information indicating the ULI of the MT. This reduces signaling overheads, and saves communication resources.

In a possible design, before the first donor-CU receives the sixth message sent by the second donor-CU, the method further includes: The first donor-CU sends a ninth message to the second donor-CU, where the ninth message includes identification information of a cell managed by the DU, and the ninth message further includes first identification information of the MT and/or second identification information of the MT, where the first identification information is identification information for identifying the MT at the first CU, and the second identification information is identification information for identifying the MT at the second CU.

In a possible design, the identification information of the cell includes a cell global identifier CGI and/or a tracking area identity TAI.

According to a ninth aspect, a communication method is provided. The method may be performed by a donor node (for example, an IAB-donor) or a chip, a chip system, or a circuit located in the donor node. The method may be implemented by using the following steps: A second donor-central unit CU receives an eleventh message sent by a first donor-CU, where the eleventh message includes identification information of a first core network element, where the second donor-CU is a donor-CU connected to a mobile termination MT of a relay node, the first donor-CU is a donor-CU connected to a distributed unit DU of the relay node, the first core network element is a core network element serving UE, and the UE is UE managed by the DU. The second donor-CU sends a twelfth message to the first core network element based on the identification information of the first core network element, where the twelfth message includes indication information indicating user location information ULI of the MT and identification information of a cell managed by the DU.

According to this solution, the second donor-CU may send, to the first core network element serving the UE, the indication information indicating the ULI of the MT and the identification information of the cell managed by the DU, so that the first donor-CU does not need to report the ULI of the MT or the indication information indicating the ULI of the MT again. This ensures accuracy of location information of the UE, and reduces transmission resources.

In a possible design, before the second donor-CU sends the twelfth message to the first core network element based on an identifier of the first core network element, the method further includes: The second donor-CU receives an eighth message sent by the MT, where the eighth message includes the identification information of the cell managed by the DU. Alternatively, the second donor-CU receives a ninth message sent by the first donor-CU, where the ninth message includes the identification information of the cell managed by the DU, and the ninth message further includes first identification information of the MT and/or second identification information of the MT, where the first identification information is identification information for identifying the MT at the first donor-CU, and the second identification information is identification information for identifying the MT at the second donor-CU.

In a possible design, the identification information of the cell includes a cell global identifier CGI and/or a tracking area identity TAI.

According to a tenth aspect, a communication method is provided. The method may be performed by a donor node (for example, an IAB-donor) or a chip, a chip system, or a circuit located in the donor node. The method may be implemented by using the following steps: A first donor-central unit CU sends an eleventh message to a second donor-CU, where the eleventh message includes identification information of a first core network element, where the second donor-CU is a donor-CU connected to a mobile termination MT of a relay node, the first donor-CU is a donor-CU connected to a distributed unit DU of the relay node, the first core network element is a core network element serving UE, and the UE is UE managed by the DU. The first donor-CU sends a tenth message to the first core network element, where the tenth message includes user location information ULI of the UE.

According to an eleventh aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to: if a first donor-central unit CU is different from a second donor-CU, determine to include a backhaul adaptation protocol BAP address of a relay node in a first message, and to include first identification information of a mobile termination MT of the relay node and/or second identification information of the MT in the first message, where the first donor-CU is a target donor-CU to which the DU of the relay node is to be migrated, the second donor-CU is a donor-CU connected to the MT, the first message is for requesting to set up an interface connection between the DU and the first donor-CU, and the BAP address is used for communication of the relay node in a topology managed by the second donor-CU; and the first identification information is identification information for identifying the MT at the first donor-CU, and the second identification information is identification information for identifying the MT at the second CU; and send the first message to the first donor-CU via the communication module.

In a possible design, the first message further includes an identifier of the DU.

In a possible design, the processing module is further configured to: before sending the first message to the first donor-CU via the communication module, receive the first identification information and/or the second identification information from the second donor-CU via the communication module; or receive the first identification information and/or the second identification information from a third donor-CU via the communication module, where the third donor-CU is a source donor-CU from which the DU is to be migrated, and the third donor-CU and the second donor-CU may be different donor-CUs or a same donor-CU.

In a possible design, the processing module is specifically configured to: receive, via the communication module, an RRC message sent by the second donor-CU, where the RRC message includes the first identification information and/or the second identification information; and
receive, via the communication module, an F1 message sent by the third donor-CU, where the F1 message includes the first identification information and/or the second identification information.

According to a twelfth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to: if a first donor-central unit CU is different from a second donor-CU, determine to include identification information of a DU in a first message, and to include first identification information of a mobile termination MT of a relay node and/or second identification information of the MT in the first message, where the first donor-CU is a target donor-CU to which the DU of the relay node is to be migrated, the second donor-CU is a donor-CU connected to the MT, the first message is for requesting to set up an interface connection between the DU and the first donor-CU, and the BAP address is used for communication of the relay node in a topology managed by the second donor-CU; and the first identification information is identification information for identifying the MT at the first donor-CU, and the second identification information is identification information for identifying the MT at the second donor-CU; and send the first message to the first donor-CU via the communication module.

In a possible design, the processing module is further configured to determine not to include the backhaul adaptation protocol BAP address of the relay node in the first message.

In a possible design, the processing module is further configured to: before the DU sends the first message to the first donor-CU, receive the first identification information and/or the second identification information from the second donor-CU via the communication module; or receive the first identification information and/or the second identification information from a third donor-CU via the communication module, where the third donor-CU is a source donor-CU from which the DU is to be migrated, and the third donor-CU and the second donor-CU may be different donor-CUs or a same donor-CU.

According to a thirteenth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to: if a first donor-central unit CU is different from a second donor-CU, determine not to include a backhaul adaptation protocol BAP address of a relay node in a first message, where the first donor-CU is a target donor-CU to which the DU of the relay node is to be migrated, the second donor-CU is a donor-CU connected to a mobile termination MT of the relay node, the first message is for requesting to set up an interface connection between the DU and the first donor-CU, and the BAP address is used for communication of the relay node in a topology managed by the second donor-CU; and send the first message to the first donor-CU via the communication module.

In a possible design, the processing module is further configured to: if the first donor-CU is the same as the second donor-CU, determine to include the BAP address of the relay node in the first message.

According to a fourteenth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to send a second message to a first donor-central unit CU via the communication module, where the second message includes a backhaul adaptation protocol BAP address of a relay node, and the BAP address is used for communication of the relay node in a topology managed by the first donor-CU; and there is an F1 interface connection between the DU of the relay node and the first donor-CU.

In a possible design, the second message is a configuration update message.

According to a fifteenth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to receive, via the communication module, a third message sent by a distributed unit DU of a relay node, where the third message includes user location information ULI of a mobile termination MT of the relay node, and a first donor-CU is a donor-CU connected to the DU. The first donor-CU sends a fourth message to a first core network element, where the fourth message includes ULI of UE and indication information indicating the ULI of the MT, the first core network element is a core network element serving the UE, and the UE is UE managed by the DU.

According to a sixteenth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to: receive, via the communication module, a fifth message sent by a second donor-CU, where the fifth message includes user location information ULI of a mobile termination MT of a relay node, a first donor-CU is a donor-CU connected to a DU, and the second donor-CU is a donor-CU connected to the MT; and send a fourth message to a first core network element via the communication module, where the fourth message includes ULI of UE and indication information indicating the ULI of the MT, the first core network element is a core network element serving the UE, and the UE is UE managed by the DU.

According to a seventeenth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to send a sixth message to a first donor-CU via the communication module, where the sixth message includes identification information of a second core network element, the first donor-CU is a donor-CU connected to a distributed unit DU of a relay node, the second donor-CU is a donor-CU connected to a mobile termination MT of the relay node, and the second core network element is a core network element serving the MT. The second donor-CU sends a seventh message to the second core network element, where the seventh message includes indication information indicating user location information ULI of the MT and identification information of a cell managed by the DU.

In a possible design, the processing module is further configured to: receive, via the communication module, an eighth message sent by the MT, where the eighth message includes the identification information of the cell managed by the DU; or receive a ninth message sent by the first donor-CU via the communication module, where the ninth message includes the identification information of the cell managed by the DU, and the ninth message further includes first identification information of the MT and/or second identification information of the MT, where the first identification information is identification information for identifying the MT at the first donor-CU, and the second identification information is identification information for identifying the MT at the second donor-CU.

In a possible design, the identification information of the cell includes a cell global identifier CGI and/or a tracking area identity TAI.

According to an eighteenth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to: receive a sixth message sent by a second donor-CU via the communication module, where the sixth message includes an identifier of a second core network element, the first donor-CU is a donor-CU connected to a distributed unit DU of a relay node, the second donor-CU is a donor-CU connected to a mobile termination MT of the relay node, and the second core network element is a core network element serving the MT; if the second core network element and a first core network element are a same core network element, determine to include user location information ULI of UE in a tenth message, where the first core network element is a core network element serving the UE, and the UE is UE managed by the DU; or if the second core network element and the first core network element are not the same core network element, determine to include, in the tenth message, the user location information ULI of the UE and indication information indicating ULI of the MT; and send the tenth message to the first core network element via the communication module.

In a possible design, the processing module is further configured to: before the first donor-CU receives the sixth message sent by the second donor-CU, send a ninth message to the second donor-CU via the communication module, where the ninth message includes identification information of a cell managed by the DU, and the ninth message further includes first identification information of the MT and/or second identification information of the MT. The first identification information is identification information for identifying the MT at the first CU, and the second identification information is identification information for identifying the MT at the second CU.

In a possible design, the identification information of the cell includes a cell global identifier CGI and/or a tracking area identity TAI.

According to a nineteenth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to: receive, via the communication module, an eleventh message sent by a first donor-CU, where the eleventh message includes identification information of a first core network element, where the second donor-CU is a donor-CU connected to a mobile termination MT of a relay node, the first donor-CU is a donor-CU connected to a distributed unit DU of the relay node, the first core network element is a core network element serving UE, and the UE is UE managed by the DU; and send a twelfth message to the first core network element based on the identification information of the first core network element, where the twelfth message includes indication information indicating user location information ULI of the MT and identification information of a cell managed by the DU.

In a possible design, the processing module is further configured to: before sending the twelfth message to the first core network element based on an identifier of the first core network element, receive, via the communication module, an eighth message sent by the MT, where the eighth message includes identification information of a cell managed by the DU. Alternatively, the second donor-CU receives a ninth message sent by the first donor-CU, where the ninth message includes the identification information of the cell managed by the DU, and the ninth message further includes first identification information of the MT and/or second identification information of the MT, where the first identification information is identification information for identifying the MT at the first donor-CU, and the second identification information is identification information for identifying the MT at the second donor-CU.

In a possible design, the identification information of the cell includes a cell global identifier CGI and/or a tracking area identity TAI.

According to a twentieth aspect, this application provides a communication apparatus, including a processing module and a communication module. The communication module is configured to: receive a signal from a communication apparatus other than the communication apparatus and transmit the signal to the processing module, or send a signal from the processing module to a communication apparatus other than the communication apparatus. The processing module is configured to: send an eleventh message to a second donor-CU via the communication module, where the eleventh message includes identification information of a first core network element, where the second donor-CU is a donor-CU connected to a mobile termination MT of a relay node, the first donor-CU is a donor-CU connected to a distributed unit DU of the relay node, the first core network element is a core network element serving UE, and the UE is UE managed by the DU; and send a tenth message to the first core network element via the communication module, where the tenth message includes user location information ULI of the UE.

According to a twenty-first aspect, an embodiment of this application provides a communication apparatus, including a processor coupled to a memory. The processor is configured to invoke a program stored in the memory, to perform any implementation method in the first aspect to the tenth aspect. The memory may be located inside the apparatus, or may be located outside the apparatus. In addition, there may be one or more processors.

According to a twenty-second aspect, an embodiment of this application provides a communication apparatus, including a processor and a memory. The memory is configured to store computer instructions. When the communication apparatus runs, the processor executes the computer instructions stored in the memory, so that the communication apparatus performs any implementation method in the first aspect to the tenth aspect.

According to a twenty-third aspect, an embodiment of this application further provides a computer program product. The computer program product includes a computer program. When the computer program is run by a processor, any implementation method in the first aspect to the tenth aspect is implemented.

According to a twenty-fourth aspect, an embodiment of this application further provides a computer-readable storage medium. The storage medium stores a computer program or instructions, and when the computer program or the instructions are executed by a processor, any implementation method in the first aspect to the tenth aspect is implemented.

### BRIEF DESCRIPTION OF DRAWINGS

FIG. 1 is a diagram of an IAB network according to an embodiment of this application;
FIG. 2 is a diagram of a multi-hop IAB network according to an embodiment of this application;
FIG. 3 is a diagram of an architecture of an IAB network according to an embodiment of this application;
FIG. 4 is a diagram of a control plane CP protocol stack according to an embodiment of this application;
FIG. 5 is a diagram of a user plane UP protocol stack according to an embodiment of this application;
FIG. 6 is a diagram of partial migration according to an embodiment of this application;
FIG. 7 is a diagram of full migration according to an embodiment of this application;
FIG. 8 is a diagram of IAB-node migration according to an embodiment of this application;
FIG. 9 is a diagram of an IAB-node migration scenario according to an embodiment of this application;
FIG. 10 is a diagram of an mIAB-node migration scenario in an IAB network according to an embodiment of this application;
FIG. 11 is a flowchart of a communication method according to an embodiment of this application;
FIG. 12 is a flowchart of a communication method according to an embodiment of this application;
FIG. 13 is a flowchart of a communication method according to an embodiment of this application;
FIG. 14 is a flowchart of a communication method according to an embodiment of this application;
FIG. 15 is a diagram of a scenario in which an mIAB-MT and an mIAB-DU are connected to different donor-CUs according to an embodiment of this application;
FIG. 16 is a flowchart of a communication method according to an embodiment of this application;
FIG. 17 is a flowchart of a communication method according to an embodiment of this application;
FIG. 18 is a flowchart of a communication method according to an embodiment of this application;
FIG. 19 is a flowchart of a communication method according to an embodiment of this application;
FIG. 20 is a flowchart of a communication method according to this application;
FIG. 21 is a diagram of a structure of a communication apparatus according to an embodiment of this application; and
FIG. 22 is a diagram of a structure of a communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

Names of all nodes and messages in this application are merely names that are set for ease of description, and names in an actual network may be different. It should not be understood that names of various nodes and messages are limited in this application. On the contrary, any name having a function the same as or similar to that of a node or a message used in this application is considered as a method or an equivalent replacement of this application, and shall fall within the protection scope of this application. Details are not described below.

The following describes some terms in embodiments of this application, to facilitate understanding of a person skilled in the art.
(1) A terminal device is a device that provides voice and/or data connectivity for a user. The terminal device in this application may be a terminal device or a hardware component that is inside the terminal device and that can implement a function of a terminal.

The terminal device may also be referred to as a terminal, user equipment (user equipment, UE), a mobile station, a mobile termination, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a mechanical arm, a smart home device, or the like. A specific technology and a specific device form that are used by the terminal device are not limited in embodiments of this application. For ease of description, the following uses an example in which the UE is used as the terminal device for description.

A function of the terminal device may be implemented by using a hardware component inside the terminal device, and the hardware component may be a processor and/or a programmable chip inside the terminal device. Optionally, the chip may be implemented by using an application-specific integrated circuit (application-specific integrated circuit, ASIC) or a programmable logic device (programmable logic device, PLD). The PLD may be any one of a complex programmable logical device (complex programmable logical device, CPLD), a field-programmable gate array (field-programmable gate array, FPGA), generic array logic (generic array logic, GAL), and a system on a chip (system on a chip, SoC), or any combination thereof.

For the various terminal device examples described above, if the terminal devices are located in a vehicle (for example, placed in the vehicle or installed in the vehicle), the terminal devices may be all considered as vehicle-mounted terminals. For example, the vehicle-mounted terminals are also referred to as on-board units (on-board units, OBUs).

(2) A network node may also be referred to as a wireless backhaul device, and may provide a wireless access service for the terminal device over an access link (access link, AL). The network node is connected to a donor node over a backhaul link (backhaul link, BL or BH) to transmit service data of the terminal device, and to resend or forward the service data, to expand coverage of a mobile communication system. In an example, in long term evolution (long term evolution, LTE), the network node may be referred to as a relay node (relay node, RN), or may be referred to as a relay device, a relay transmission reception point (relay transmission reception point, rTRP), a transmission point (transmission point, TP), or the like.

The network node may set up a wireless backhaul link to one or more upper-level nodes (parent nodes), and access a core network via the upper-level node. The upper-level node may control (for example, perform data scheduling, timing modulation, or power control on) the network node by using a plurality of types of signaling. In addition, the network node may provide a service for one or more lower-level nodes (child nodes). The upper-level node of the network node may be a donor node, or may be another network node. The lower-level node of the network node may be a terminal device, or may be another network node.

In an integrated access and backhaul (integrated access and backhaul, IAB) network, the network node may be an IAB-node (IAB-node). The IAB-node includes a mobile termination (mobile termination, MT) and a distributed unit (distributed unit, DU). When facing a parent node of the IAB-node, the IAB-node may be used as a terminal device, namely, a role of the MT, and is configured to provide data backhaul for a child node of the IAB-node. The MT of the IAB-node may be referred to as an IAB-MT. When facing the child node of the IAB-node, the IAB-node is used as a network device, namely, a role of the DU, and is configured to provide an access service for the child node of the IAB-node. The DU of the IAB-node may be referred to as an IAB-DU. The child node of the IAB-node may be another IAB-node or a terminal device.

(3) A donor node (or briefly referred to as a donor) may access a core network, and is a device that is in a relay network and that is configured to connect the terminal device to a wireless network. The donor node may be connected to the core network over a wired link (for example, an optical fiber cable). The donor node may be responsible for receiving data from the core network and forwarding the data to the network node, or receiving data from the network node and forwarding the data to the core network. In the IAB network, the donor node may be an IAB-donor node (or referred to as an IAB donor or IAB-donor).

In an example, the donor node may include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or the like; may include a base station in an evolved LTE system (LTE-Advanced, LTE-A) or a 4G access network: an evolved universal mobile telecommunications system (universal mobile telecommunications system, UMTS) terrestrial radio access network (evolved UMTS terrestrial radio access network, E-UTRAN), for example, an evolved NodeB (NodeB, eNB, e-NodeB, or evolved NodeB); or may include a next generation NodeB (next generation NodeB, gNB) in a 5th generation (5th generation, 5G) mobile communication technology new radio (new radio, NR) system or the like.

In another example, the donor node may include a CU and a DU. The CU of the donor node may be referred to as a donor-CU (donor-CU), and the DU of the donor node may be referred to as a donor-DU (donor-DU).

The donor-CU and the donor-DU are connected through an F1 interface, and the F1 interface may further include a control plane interface (F1-C) and a user plane interface (F1-U). The CU is connected to the core network through a next generation (next generation, NG) interface. The donor-CU may alternatively be in a form in which a user plane (user plane, UP) (which is referred to as CU-UP for short in this application) and a control plane (control plane, CP) (which is referred to as CU-CP for short in this application) are separated. In other words, the donor-CU includes the CU-CP and the CU-UP. One donor-CU may include one donor-CU-CP and at least one donor-CU-UP.

The donor-DU may be mainly configured to implement functions of layer 1 (layer 1, L1) and layer 2 (layer 2, L2) protocol stacks, including functions of a physical (physical, PHY) layer, a media access control (media access control, MAC) layer, or a radio link control (radio link control, RLC) layer. The donor-CU mainly implements functions of a packet data convergence protocol (packet data convergence protocol, PDCP) layer, a service data adaptation protocol (service data adaption protocol, SDAP) layer, or a radio resource control (radio resource control, RRC) layer. An F1-C interface is set up between the donor-CU-CP and the IAB-DU, and an F1-U interface is set up between the donor-CU-UP and the IAB-DU.

A function of the donor node may be implemented by a hardware component inside the donor node, for example, implemented by a processor and/or a programmable chip inside the donor node. For example, the chip may be implemented by using an ASIC or a PLD. The PLD may be any one of a CPLD, an FPGA, GAL, and a SoC or any combination thereof.

It should be understood that, in subsequent descriptions of this application, the IAB-node is used as a relay node and the IAB-donor node is used as a donor node, and functions performed by the relay node and the donor node in the method provided in embodiments of this application are described. However, it should not be understood that an execution body in this application is limited to the IAB-node and the IAB-donor node. In other words, the IAB-node in this application may alternatively be replaced with a network node, a relay node, or a wireless backhaul device. Correspondingly, the IAB-donor node may alternatively be replaced with a donor node. In other words, an application scenario of this application is not limited to the IAB network, and this application may be further applied to another type of relay network.

In embodiments of this application, "at least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may indicate a, b, c, a and b, a and c, b and c, or a, b, and c, where a, b, and c may be singular or plural.

Unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first data packet and a second data packet are merely used to distinguish between different data packets, but do not indicate a difference in priorities, sizes, importance degrees, or the like of the two data packets.

It should be noted that, in this application, the terms such as "example" or "for example" are used to represent giving an example, an illustration, or a description. Any embodiment or design solution described as an "example" or "for example" in this application should not be explained as being more preferred or having more advantages than another embodiment or design solution. Exactly, use of the word "example", "for example" or the like is intended to present a relative concept in a specific manner.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The foregoing describes some terms in embodiments of this application. The following describes an architecture of a network system to which the method provided in this application is applied.

The communication system mentioned in embodiments of this application includes but is not limited to a narrowband internet of things (narrowband internet of things, NB-IoT) system, a wireless local area network (wireless local access network, WLAN) system, a long term evolution (long term evolution, LTE) system, a 5th generation mobile communication system (5th generation mobile networks or 5th generation wireless systems, 5G), or a communication system after 5G, for example, a new radio (new radio, NR) system or a device-to-device (device-to-device, D2D) communication system.

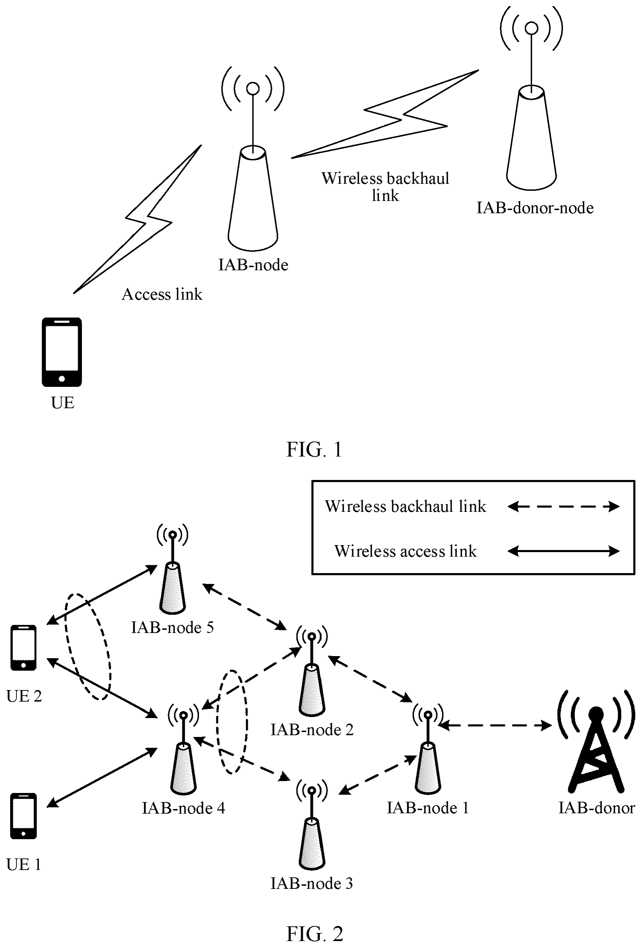

FIG. 1 shows an architecture of an IAB network. An IAB-node (shown as the IAB-node in the figure) is configured to provide wireless access and wireless backhaul of an access service for UE. The IAB-donor (shown as the IAB-donor in the figure) is configured to: provide a wireless backhaul function for the IAB-node and provide an interface between the UE and a core network. The IAB-node is connected to the IAB-donor over a wireless backhaul link, so that the UE served by the IAB-node is connected to the core network.

FIG. 2 shows an architecture of an IAB network in multi-hop networking. Between UE (including UE 1 and UE 2 shown in FIG. 2) served by an IAB-node (shown as the IAB-node in the figure) and an IAB-donor (shown as the IAB-donor in the figure), there is at least one transmission path including a plurality of links, and each transmission path includes UE, one or more IAB-nodes, and the IAB-donor. Each IAB-node considers a neighboring node that provides access and backhaul services for the IAB-node as a parent node. Correspondingly, each IAB-node may be considered as a child node of the parent node of the IAB-node. For example, in FIG. 2, a parent node of an IAB-node 1 is the IAB-donor, and the IAB-node 1 is a parent node of an IAB-node 2 and an IAB-node 3. An uplink data packet of UE may be transmitted to the IAB-donor via one or more IAB-nodes, and is then sent by the IAB-donor to a mobile gateway device, for example, a user plane function (user plane function, UPF) unit in a 5G core network. A downlink data packet is received by the IAB-donor from the mobile gateway device, and is then sent to the UE via the IAB-node.

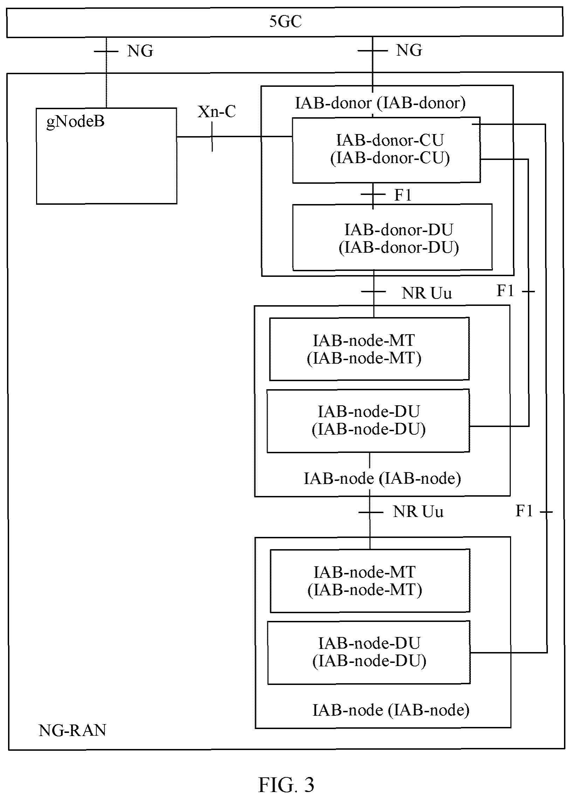

FIG. 3 is an example diagram of an architecture of an IAB network. SA networking is used as an example in FIG. 3. Refer to FIG. 3. An IAB-DU is logically connected to an IAB-donor-CU (referred to as a donor-CU in subsequent descriptions of this application) through an F1 interface. That is, an F1 connection between the IAB-DU and the donor-CU may not be a physical direct connection, but a logical connection. Actually, the F1 connection between the IAB-DU and the donor-CU is physically implemented through an NR Uu interface between an IAB-MT of each hop and a parent node DU of the IAB-MT, so that the IAB-DU can communicate with the donor-CU. Therefore, it may be considered that the F1 interface exists logically. The F1 interface supports a user plane protocol (F1-U) and a control plane protocol (F1-C). The user plane protocol includes one or more of the following protocol layers: a GPRS tunneling protocol user plane (General Packet Radio Service tunneling protocol user plane, GTP-U) layer, a UDP (user datagram protocol, user datagram protocol) layer, an IP (internet protocol, internet Protocol) layer, and the like. The control plane protocol includes one or more of the following protocol layers: an F1AP (F1 application protocol, F1 application protocol) layer, an SCTP (stream control transmission protocol, stream control transmission protocol) layer, an IP layer, and the like.

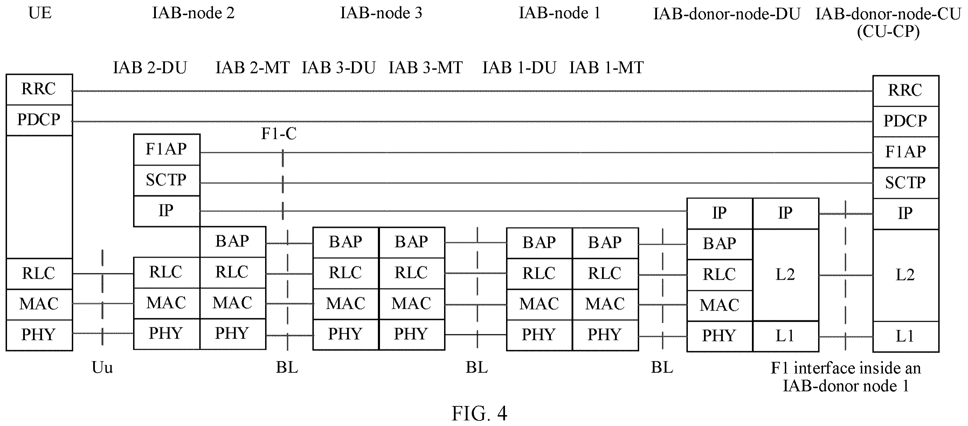

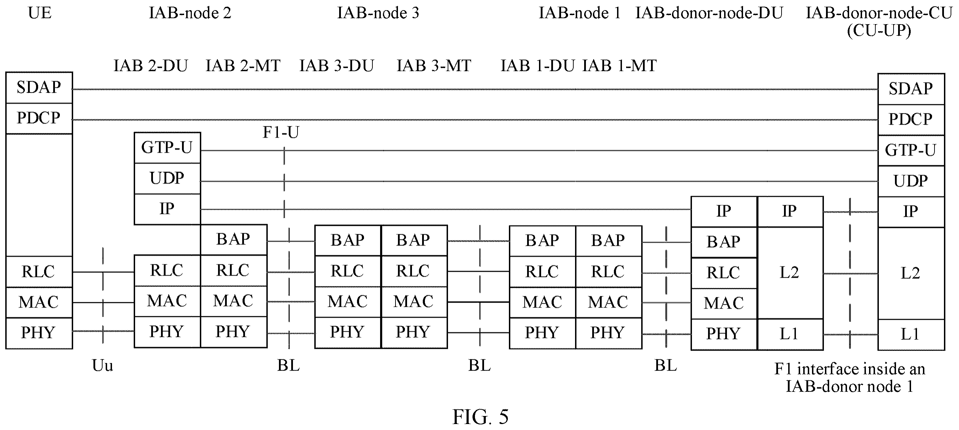

FIG. 4 and FIG. 5 are respectively diagrams of a CP protocol stack and a UP protocol stack in an IAB network with three-hop backhaul. In this architecture, UE accesses the network via an IAB-node 2, an IAB-node 3, an IAB-node 1, and an IAB-donor 1 in sequence. The following separately describes procedures of a user plane service (F1-U traffic) and a control plane service (F1-C traffic) of an F1 interface based on FIG. 4 and FIG. 5.

For a CP plane, as shown in FIG. 4, a Uu interface is set up between the UE and an IAB 2-DU (namely, a DU of the IAB-node 2), and peer protocol layers include an RLC layer, a MAC layer, and a PHY layer. An F1-C interface is set up between the IAB 2-DU and a donor-CU (namely, a CU of the IAB-donor 1), and peer protocol layers include an F1 application protocol (F1 application protocol, F1AP) layer and a stream control transmission protocol (stream control transmission protocol, SCTP) layer. A donor-DU (namely, a DU module of the IAB-donor 1) and the donor-CU are connected in a wired manner, and peer protocol layers include an internet protocol (internet protocol, IP) layer, a layer 2, and a layer 1. Backhaul links are set up between the IAB-node 2 and the IAB-node 3, between the IAB-node 3 and the IAB-node 1, and between the IAB-node 1 and the donor-DU, and peer protocol layers include a backhaul adaptation protocol (backhaul adaptation protocol, BAP) layer, an RLC layer, a MAC layer, and a PHY layer. In addition, peer RRC layers and peer PDCP layers are set up between the UE and the donor-CU, and peer IP layers are set up between the IAB 2-DU (namely, the DU of the IAB-node 2) and the donor-DU. Compared with a CP protocol stack of a single air interface, in the CP protocol stack in the IAB network, a DU module of the access IAB-node implements functions of a gNB-DU of the single air interface, to be specific, functions of setting up the peer RLC layer, the peer MAC layer, and the peer PHY layer with the UE, and setting up the peer F1AP layer and the peer SCTP layer with the donor-CU; and the donor-CU implements functions of a gNB-CU of the single air interface.

On the CP, an RRC message is encapsulated in an F1AP message between the access IAB-node and the donor-CU for transmission. Specifically, in an uplink direction, the UE encapsulates the RRC message in a PDCP protocol data unit (protocol data unit, PDU); and processes the PDCP protocol data unit at the RLC layer, the MAC layer, and the PHY layer in sequence, and sends a processed PDCP protocol data unit to the IAB 2-DU. The IAB 2-DU performs processing at the PHY layer, the MAC layer, and the RLC layer in sequence to obtain the PDCP PDU, encapsulates the PDCP PDU in the F1AP message, and performs processing at the SCTP layer and the IP layer in sequence to obtain an IP packet. An IAB 2-MT (namely, an MT of the IAB-node 2) separately processes the IP packet at the BAP layer, the RLC layer, the MAC layer, and the PHY layer, and then sends a processed IP packet to an IAB 3-DU (namely, a DU of the IAB-node 3). The IAB 3-DU performs processing at the PHY layer, the MAC layer, the RLC layer, and the BAP layer in sequence to obtain an IP packet. Then, similar to an operation of the IAB 2-MT, an IAB 3-MT (namely, an MT of the IAB-node 3) sends the IP packet to an IAB 1-DU (namely, a DU of the IAB-node 1), and an IAB 1-MT (namely, an MT of the IAB-node 1) then sends the IP packet to the donor-DU. After obtaining the IP packet through parsing, the donor-DU sends the IP packet to the donor-CU. The donor-CU processes the IP packet at the SCTP layer, the F1AP layer, and the PDCP layer in sequence, to obtain the RRC message. A downlink direction is similar, and details are not described.

On a UP, as shown in FIG. 5, a Uu interface is set up between the UE and an IAB 2-DU, and peer protocol layers include an RLC layer, a MAC layer, and a PHY layer. An F1-U interface is set up between the IAB 2-DU and a donor-CU, and peer protocol layers include a general packet radio service (general packet radio service, GPRS) tunneling protocol for the user plane (GPRS tunneling protocol for the user plane, GTP-U) layer and a user datagram protocol (user datagram protocol, UDP) layer. A donor-DU and the donor-CU are connected in a wired manner, and peer protocol layers include an IP layer, an L2 layer, and an L1 layer. BLs are set up between the IAB-node 2 and the IAB-node 3, between the IAB-node 3 and the IAB-node 1, and between the IAB-node 1 and the donor-DU, peer protocol layers include a BAP layer, an RLC layer, a MAC layer, and a PHY layer. In addition, peer SDAP layers and peer PDCP layers are set up between the UE and the donor-CU, and peer IP layers are set up between the IAB 2-DU and the donor-DU. Compared with a UP protocol stack of a single air interface, a DU module of the access IAB-node implements some functions of a gNB-DU of the single air interface, to be specific, functions of setting up the peer RLC layer, the peer MAC layer, and the peer PHY layer with the terminal device, and setting up the peer GTP-U layer and the peer UDP layer with the donor-CU; and the donor-CU implements functions of a gNB-CU of the single air interface.

The IAB network supports multi-hop backhaul, and the multi-hop network relates to routing and forwarding between nodes. In the CP and UP protocol stacks of the IAB architecture, a new protocol layer, namely, a BAP layer, is introduced into a wireless backhaul link. The protocol layer is located above the RLC layer, and is used to implement functions such as routing of a data packet on the wireless backhaul link and bearer mapping. As shown in FIG. 4 and FIG. 5, a start point of the BAP layer is located at the IAB-node connected to the UE, and an end point of the BAP layer is located at the donor-DU. The donor-CU allocates a unique BAP address to each IAB-node and donor-DU controlled by the donor-CU, so that each IAB-node and donor-DU in the network can be uniquely identified.

A corresponding BAP entity on the IAB-node executes a BAP layer protocol. Each IAB-node has two BAP entities, where an MT and a DU each include one BAP entity, and BAP addresses of the BAP entities included in the MT and the DU are the same. Each of the two BAP entities has sending and receiving functions.

A function of the BAP entity includes adding a BAP header (header) to an IP data packet from an upper layer, where the BAP header includes a BAP routing identity (identity, ID). Specifically, the BAP routing identity may include a BAP address of a target node and an identifier of a path (which may be represented as a path (path) in this application) to the node. The BAP routing ID reflects an identifier of a target node and a path used to reach the target node. It should be understood that, in this application, the BAP address of the target node in the BAP routing identity may be briefly referred to as a BAP address in the BAP routing identity or a BAP address in the routing identity. The donor-CU configures a routing table for each IAB-node, and content in the routing table is a mapping relationship between a BAP routing ID and a next-hop BAP address. The routing table may indicate a specific network node to which a data packet needs to be forwarded. Each IAB-node is configured with uplink (uplink, UL) and downlink (downlink, DL) routing tables (configured by the donor-CU). The DU of the IAB-node uses the DL routing table, and the DL routing table may indicate a specific child node to which a data packet needs to be forwarded. The MT of the IAB-node uses the UL routing table, and the UL routing table may indicate a specific parent node to which a data packet needs to be forwarded.

In addition to a routing function, the BAP protocol is further used to perform mapping between ingress and egress BH RLC channels, and a mapping rule is also configured by the donor-CU. An essence thereof may be understood as a finer-grained routing in which an RLC channel is further selected on a basis of determining a next-hop target BAP address (that is, determining a next-hop link). When the access IAB-node receives a data packet, the data packet is forwarded to a higher layer, and is processed in a manner in which a common DU processes an incoming F1-U or F1-C service data packet.

For specific functions of the BAP layer, refer to the 3rd generation partnership project (3rd generation partnership project, 3GPP) technical specification (technical specification, TS) 38.340 standard. Details are not described herein again.

In the existing standard, the donor-CU needs to know a binding relationship between an IAB-MT and an IAB-DU to set up an entire topology relationship, to configure BAP routing, bearer mapping, and the like for an IAB-node. In a network access process of the IAB-node, the IAB-MT may first access a network through random access, RRC connection setup, or the like. The donor-CU sends, to the IAB-MT by using an RRC message, a backhaul link configuration related to the IAB-node. In this step, the donor-CU further configures a BAP address of the IAB-node for the IAB-MT. The IAB-DU sends an F1 SETUP REQUEST message to the donor-CU, where the F1 SETUP REQUEST message carries the BAP address of the IAB-node. After receiving the F1 SETUP REQUEST message sent by the IAB-DU, the donor-CU may determine, based on the BAP address in the F1 SETUP REQUEST message, that the DU and the MT to which the donor-CU has previously delivered the BAP address belong to a same IAB-node. After the IAB-node accesses the network, a connection between the IAB-MT and the donor-CU may be an RRC connection, and a connection between the IAB-DU and the donor-CU may be an F1 connection.

The following describes inter-donor-CU migration of the IAB-node. In the existing standard, there are two implementations of the inter-donor-CU migration of the IAB-node: full migration (Full migration) and partial migration (Partial migration). In the full migration, the IAB-MT and the IAB-DU each need to be migrated from a source donor-CU to a target donor-CU. In the partial migration, the IAB-MT is migrated from the source donor-CU to the target donor-CU, and the IAB-DU may not be migrated to the target donor-CU. In the partial migration, inter-donor-CU migration occurs on the IAB-MT, but the IAB-DU still maintains an F1 connection to the source donor-CU. In this way, an F1 interface is switched to another path for transmission, but an anchor of the F1 interface is not changed, to implement load balancing migration of the IAB-node. In the full migration, the IAB-DU needs to set up an F1 connection to the target donor-CU, to cope with a scenario in which the IAB-node moves in a large range.

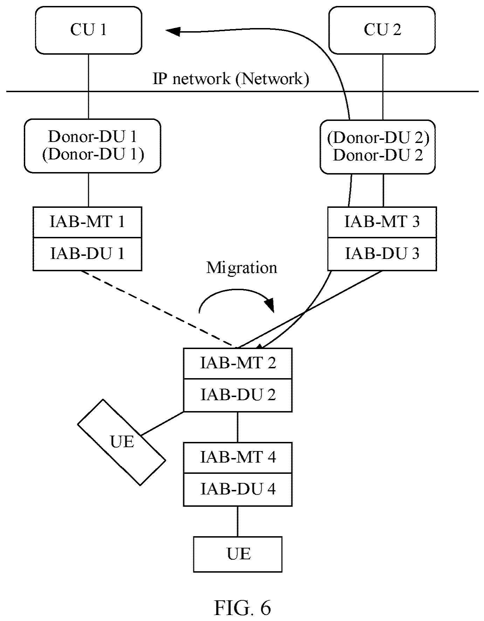

For example, FIG. 6 is a diagram of partial migration. An IAB-node that is migrated may be referred to as a boundary node (boundary node). Refer to FIG. 6. The boundary node in FIG. 6 is an IAB-node 2. Before partial migration, there is an RRC connection between an IAB-MT 2 and a CU 1, and there is an F1 interface between an IAB-DU 2 and the CU 1. The IAB-node 2 communicates with an IAB-donor through a source path (through an IAB-node 1 including an IAB-MT 1 and an IAB-DU 1). During the partial migration, inter-donor-CU cell handover occurs on the IAB-MT 2, and the IAB-MT 2 sets up an RRC connection to a CU 2. However, to avoid introduction of an F1 interface re-setup process, the IAB-DU 2 still maintains the F1 interface with the CU 1, and an F1 interface is not set up between the IAB-DU 2 and the CU 2. Therefore, a communication path between the CU 1 and the IAB-DU 2 changes to being inter-topology: CU 1↔donor-DU 2↔IAB-MT 3↔IAB-DU 3↔IAB-MT 2↔IAB-DU 2. In this architecture shown in FIG. 6, the CU 1 and the CU 2 are respectively referred to as an F1-terminating CU and a non-F1-terminating CU. It should be noted that after the partial migration, data does not need to pass through the CU 2 during data transmission on the path, and the CU 1 and the donor-DU 2 directly communicate with each other over an IP network. Optionally, data between the CU 1 and the donor-DU 2 may alternatively be transmitted via a plurality of hops of some other transport network nodes, and the CU 2 may alternatively be used as an intermediate-hop node thereof.

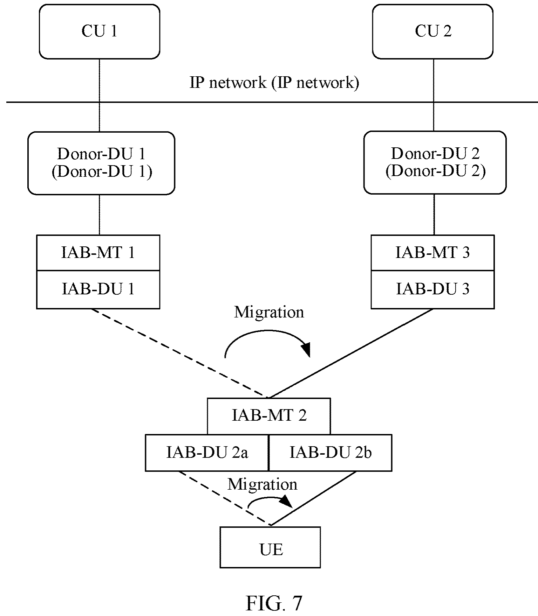

FIG. 7 is a diagram of full migration. In the full migration, an IAB-MT 2 is migrated to a CU 2, and an F1 interface between an IAB-DU 2 and a CU 1 needs to be migrated to the CU 2. Because coexistence of F1 interfaces between one IAB-DU and two donor-CUs is not supported in a protocol, the IAB-DU 2 may be extended to two logical DUs: an IAB-DU 2a and an IAB-DU 2b. The IAB-DU 2a always maintains an F1 interface with the CU 1, and the IAB-DU 2b is configured to set up a new F1 interface with the CU 2. The DU 2a and the DU 2b may be considered as two DUs, and each has an F1 interface. For ease of description, in following descriptions of embodiments of this application, IAB-DU migration is used to represent the foregoing process. UE also needs to be handed over from a cell served by the IAB-DU 2a to a cell served by the IAB-DU 2b.

It can be learned from the foregoing descriptions that an essential difference between the full migration and the partial migration lies in whether the IAB-DU migration needs to be performed. It should be noted that, actually, an IAB-DU migration process is that an IAB-node generates a new logical DU, and the logical DU sets up an F1 interface with a target donor-CU. For ease of description, the process is referred to as the IAB-DU migration in this application.

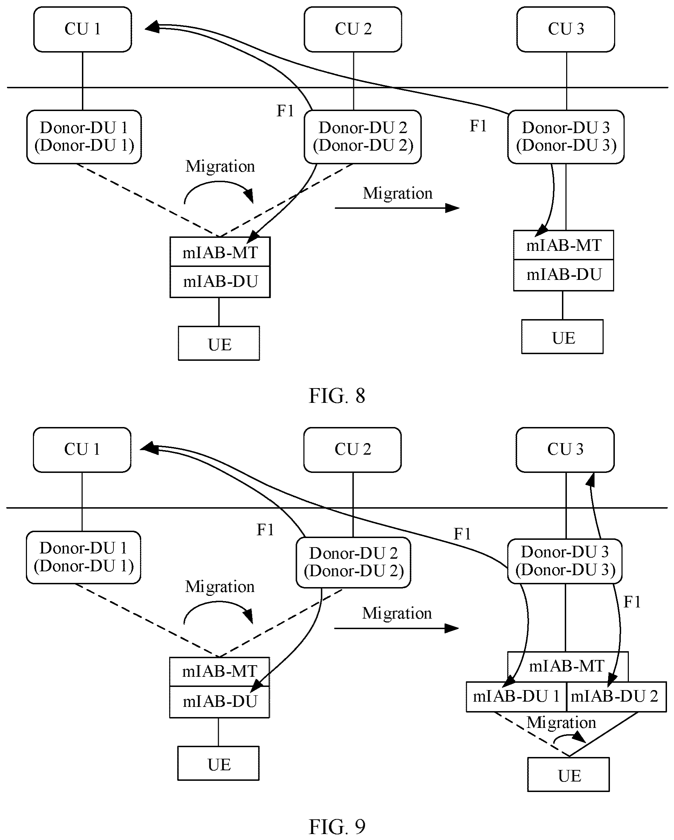

In some implementations, in IAB-node migration, continuous partial migration may be used as a baseline, and the IAB-DU migration is performed when the IAB-DU migration needs to be performed. For example, FIG. 8 is a diagram of IAB-node migration. In FIG. 8, a mobile IAB (mobile IAB, mIAB) node is used as an example for description. Refer to FIG. 8. An mIAB-MT is migrated from a topology of a CU 1 to a topology of a CU 2, and is then migrated from the topology of the CU 2 to a topology of a CU 3. An mIAB-DU always maintains an F1 connection to the CU 1. FIG. 9 is a diagram of IAB-node migration. Refer to FIG. 9. When mIAB-DU migration needs to be performed, an mIAB-node needs to generate a new logical DU (mIAB-DU 2), the mIAB-DU 2 sets up an F1 interface with a CU 3, and UE is then handed over from a cell served by a mIAB-DU 1 to a cell served by the mIAB-DU 2.

Optionally, in an IAB-node migration scenario, IAB-MT migration may be actually decoupled from IAB-DU migration. For example, IAB-MT migration and IAB-DU non-migration are partial migration, and IAB-DU migration and IAB-MT non-migration are also feasible. Due to mobility, a donor-CU of the IAB-MT may be frequently changed, but an anchor donor-CU of the IAB-DU should not be frequently changed. Therefore, the IAB-DU may access a donor-CU with a large control range, instead of selecting a donor-CU of a small base station following the IAB-MT. Therefore, the IAB-DU migration may be decoupled from the IAB-MT migration.

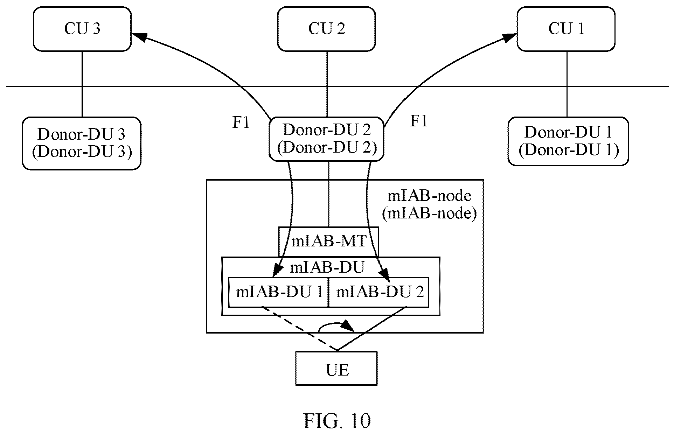

For example, FIG. 10 is a diagram of an IAB-node migration scenario according to an embodiment of this application. Refer to FIG. 10. It is assumed that a CU 3 and a CU 1 may be CUs of a macro base station, a CU 2 is a CU that is of a small base station and that is located at a boundary between a control range of the CU 3 and a control range of the CU 1, and a source donor-CU of an mIAB-node is the CU 3. When the mIAB-node is moving from the control range of the CU 3 to the control range of the CU 1, an mIAB-MT may be migrated from the CU 3 to the CU 2. When the mIAB-MT is connected to the CU 2, the CU 3 may determine to first migrate an mIAB-DU to the CU 1, to avoid an increase in a transmission delay caused by an excessively long distance from the CU 1 after the mIAB-MT continues to be migrated.

In a case in which a target donor-CU to which the mIAB-DU is to be migrated and a donor-CU connected to the mIAB-MT are not a same donor-CU, when the mIAB-DU sends an F1 SETUP REQUEST message to the target donor-CU, the F1 SETUP REQUEST message carries a BAP address of the mIAB-node, the BAP address is an address used by the mIAB-node for communication in a topology managed by the donor-CU connected to the mIAB-MT, and any two donor-CUs do not negotiate allocation of the BAP address in advance, the BAP address of the mIAB-node may conflict with a BAP address of another IAB-node served by the target donor-CU, resulting in a communication error. For example, the scenario shown in FIG. 10 is used as an example. After the mIAB-DU is migrated to the CU 1, if an IAB-node 1 and the mIAB-node in the CU 1 have a same BAP address, when the CU 1 performs BAP routing configuration based on the BAP address, the CU 1 may send route configuration information to an incorrect IAB-node because the BAP address of the IAB-node 1 conflicts with the BAP address of the mIAB-node.

In view of this, embodiments of this application provide a communication method and apparatus, to resolve a conflict between BAP addresses in a migration process of an mIAB-node in an IAB network, and ensure accuracy of data transmission in the IAB network. The method and the apparatus are based on a same inventive concept. Because the method and the apparatus have a similar problem-resolving principle, for implementations of the apparatus and the method, refer to each other. No repeated description is provided.

The following describes in detail the communication methods provided in embodiments of this application with reference to the accompanying drawings.

First, scenarios to which Embodiment 1 to Embodiment 3 are applicable are described. FIG. 10 is a diagram of an mIAB-node migration scenario in an IAB network according to an embodiment of this application. Refer to FIG. 10. A donor-CU connected to an mIAB-MT is a CU 2. That is, an RRC connection is set up between the mIAB-MT and the CU 2. A target donor-CU to which an mIAB-DU is to be migrated is a CU 1, and a source donor-CU connected to the mIAB-DU is a CU 3. That is, before the migration, an F1 connection is set up between the mIAB-DU and the CU 3. It should be noted that the CU 3 and the CU 2 may be a same donor-CU. That is, before the migration, the mIAB-DU and the mIAB-MT may be connected to the same donor-CU. Certainly, the CU 3 and the CU 2 may alternatively be different donor-CUs.

In addition, it should be noted that a connection between an IAB-node and a donor-DU in FIG. 10 is merely used as an example instead of a limitation. During implementation, there may be one or more hops of network nodes between the IAB-node and the donor-DU. This is not limited in this embodiment of this application.

### Embodiment 1

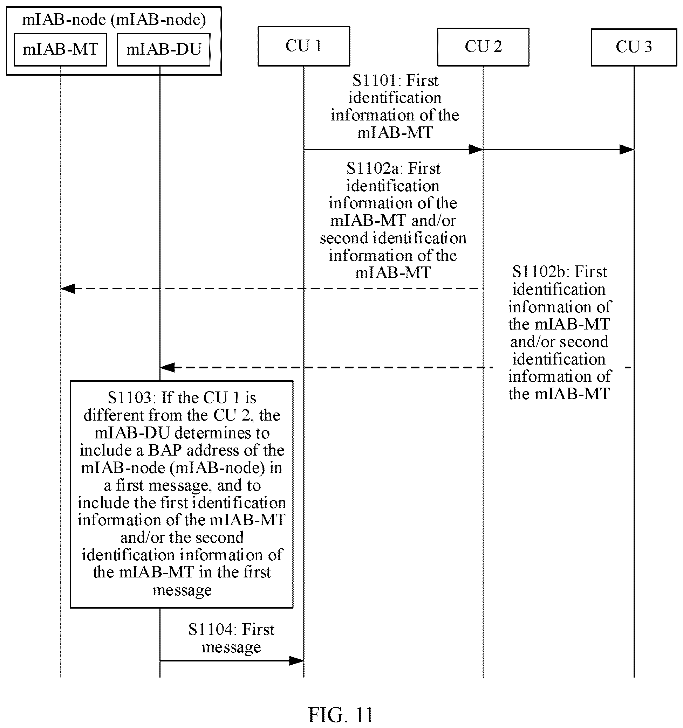

FIG. 11 is a flowchart of a communication method according to an embodiment of this application. Refer to FIG. 11. The method includes the following steps.

S1101: A CU 1 sends first identification information of an mIAB-MT to a CU 2 and/or a CU 3.

The first identification information of the mIAB-MT may be identification information for identifying the mIAB-MT at the CU 1. For example, the first identification information of the mIAB-MT may be an Xn application protocol user identifier (User equipment Xn application protocol identifier, UE XnAP ID) of the mIAB-MT served by the CU 1. The mIAB-MT has a UE XnAP ID in each donor-CU.

S1102: An mIAB-node receives the first identification information and/or second identification information of the mIAB-MT.

The second identification information of the mIAB-MT may be identification information for identifying the mIAB-MT at the CU 2. For example, the second identification information of the mIAB-MT may be a UE XnAP ID of the mIAB-MT served by the CU 2.

Optionally, S1102 may be implemented in any one of the following manners.

S1102a: The mIAB-node receives the first identification information and/or the second identification information of the mIAB-MT and from the CU 2.

In this manner, the CU 2 may send an RRC message to the mIAB-MT, where the RRC message includes the first identification information and/or the second identification information of the mIAB-MT.

S1102b: The mIAB-node receives the first identification information and/or the second identification information of the mIAB-MT and from the CU 3.

In this manner, the CU 3 may send an F1 message to an mIAB-DU, where the F1 message includes the first identification information and/or the second identification information of the mIAB-MT.

It should be noted that, when two donor-CUs perform mIAB-MT-related interaction with each other, the identification information of the mIAB-MT served by the donor-CU needs to be carried in an exchange message. The mIAB-MT-related exchange between the two donor-CUs may include, for example, migration of the mIAB-MT from one of the donor-CUs to the other donor-CU, or for another example, inter-topology traffic migration of the mIAB-MT between the two donor-CUs. Based on this, after performing mIAB-MT-related interaction with the CU 2, the CU 3 may learn of the second identification information of the mIAB-MT.

In some embodiments, S1101 is an optional step. In this case, the CU 2 or the CU 3 may perform S1102a or S1102b, to send the second identification information of the mIAB-node to the mIAB-node.

S1103: If the CU 1 is different from the CU 2, the mIAB-DU determines to include a BAP address of the mIAB-node in a first message, and to include the first identification information of the mIAB-MT and/or the second identification information of the mIAB-MT in the first message.

Optionally, the first message is for requesting to set up an F1 interface connection between the mIAB-DU and the CU 1. For example, the first message may be an F1 SETUP REQUEST.

In an optional implementation, when the CU 1 is different from the CU 2, the BAP address of the mIAB-node is an address used by the mIAB-node to perform communication in a topology managed by the CU 2. In this case, the BAP address may conflict with a BAP address of another node served by the CU 1. Therefore, the mIAB-DU may determine to include, in the first message, the BAP address of the mIAB-node and the first identification information of the mIAB-MT and/or the second identification information of the mIAB-MT, where the first identification information of the mIAB-MT and/or the second identification information of the mIAB-MT may indicate that the BAP address in the first message is the BAP address of the mIAB-node to which the mIAB-MT belongs.

Optionally, the mIAB-DU may alternatively determine to include identification information of the mIAB-DU in the first message, so that after receiving the first message, the CU 1 may determine a correspondence between the mIAB-DU and the mIAB-MT based on the identification information of the mIAB-DU and the first identification information of the mIAB-MT and/or the second identification information of the mIAB-MT, so that the CU 1 manages the mIAB-node. The identification information of the mIAB-DU may be a gNB-DU ID of the mIAB-DU.

S1104: The mIAB-DU sends the first message to the CU 1.

Optionally, the first message may include the BAP address of the mIAB-node, and may further include the first identification information of the mIAB-MT and/or the second identification information of the mIAB-MT. The following separately describes several different information combinations in the first message.
1. The first message includes the BAP address and the first identification information of the IAB-MT.
   When the first message includes the first identification information of the IAB-MT, the CU 1 may determine an identity of the IAB-MT based on the first identification information of the IAB-MT, and further determine that the BAP address is an address of an IAB-node to which a specific IAB-MT belongs.
2. The first message includes the BAP address and the second identification information of the IAB-MT.
   In some implementations, if the CU 1 has performed IAB-MT-related interaction with the CU 2, the CU 1 receives the second identification information of the IAB-MT before receiving the first message, and therefore, the CU 1 may store a correspondence between the first identification information of the IAB-MT and the second identification information of the IAB-MT. In this case, when the first message includes the second identification information of the IAB-MT, the CU 1 may determine, based on the correspondence between the first identification information of the IAB-MT and the second identification information of the IAB-MT, an identity of the IAB-MT corresponding to the second identification information, and further determine that the BAP address is an address of an IAB-node to which a specific IAB-MT belongs.
3. The first message includes the BAP address, the first identification information of the IAB-MT, and the second identification information of the IAB-MT.

In some implementations, the CU 1 has performed IAB-MT-related interaction with the CU 2, but the CU 1 may receive no second identification information of the IAB-MT. For example, the CU 1 initiates an inter-topology traffic setup request (IAB Transport Migration Management Request) to the CU 2. After performing corresponding configuration in the topology managed by the CU 2, the CU 2 does not send a reply message to the CU 1 to reduce overheads. In this case, the CU 1 receives no second identification information of the IAB-MT. In this scenario, the first message may carry both the first identification information of the IAB-MT and the second identification information of the IAB-MT. The CU 1 may determine an identity of the IAB-MT based on the first identification information of the IAB-MT and the second identification information of the IAB-MT, and the CU 1 may store a correspondence between the first identification information of the IAB-MT and the second identification information of the IAB-MT, so that the CU 1 subsequently initiates IAB-MT-related interaction with the CU 2 again.

### Embodiment 2

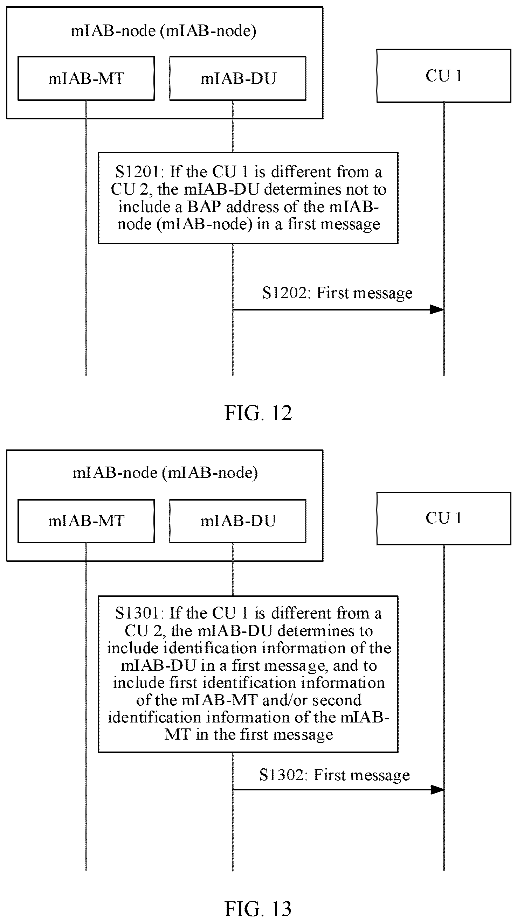

FIG. 12 is a flowchart of a communication method according to an embodiment of this application. Refer to FIG. 12. The method includes the following steps.

S1201: If a CU 1 is different from a CU 2, an mIAB-DU determines not to include a BAP address of an mIAB-node in a first message.

Optionally, the first message is for requesting to set up an F1 interface connection between the mIAB-DU and the CU 1. For example, the first message may be an F1 SETUP REQUEST.

In an optional implementation, when determining that a to-be-migrated target donor-CU (the CU 1) and a donor-CU (the CU 2) connected to an mIAB-MT are not a same CU, to prevent a conflict between the BAP address of the mIAB-node and a BAP address of another relay node in the CU 1, the mIAB-DU may determine not to include the BAP address of the mIAB-node in the first message.

In another optional implementation, if the CU 1 is the same as the CU 2, the BAP address of the mIAB-node may be determined to be included in the first message. In this case, a conflict between BAP addresses does not occur.

S1202: The mIAB-DU sends the first message to the CU 1.
in this manner, the mIAB-DU may not include the BAP address in the first message, to resolve the conflict between the BAP addresses, and remove a redundant information element from the first message. This reduces transmission resource overheads.

### Embodiment 3

It can be learned from the foregoing descriptions that, in a network access process of an mIAB-node, an mIAB-DU includes a BAP address of the mIAB-node in an F1 SETUP REQUEST message. After receiving the F1 SETUP REQUEST message, a donor-CU may determine a correspondence between the mIAB-DU and an mIAB-MT based on the BAP address in the F1 SETUP REQUEST message. This embodiment of this application provides a method for determining the correspondence between the mIAB-DU and the mIAB-MT not based on the BAP address. FIG. 13 is a flowchart of a communication method according to an embodiment of this application. Refer to FIG. 13. The method includes the following steps.

S1301: If a CU 1 is different from a CU 2, an mIAB-DU determines to include identification information of the mIAB-DU in a first message, and to include first identification information of the mIAB-MT and/or second identification information of the mIAB-MT in the first message.

Optionally, the first message is for requesting to set up an F1 interface connection between the mIAB-DU and the CU 1. For example, the first message may be an F1 SETUP REQUEST. The first identification information of the mIAB-MT may be identification information for identifying the mIAB-MT at the CU 1. For example, the first identification information of the mIAB-MT may be a UE XnAP ID of the mIAB-MT served by the CU 1. The second identification information of the mIAB-MT may be identification information for identifying the mIAB-MT at the CU 2. For example, the second identification information of the mIAB-MT may be a UE XnAP ID of the mIAB-MT served by the CU 2. The identification information of the mIAB-DU may be a gNB-DU ID of the mIAB-DU.

Optionally, the mIAB-DU may further determine not to include a BAP address of an mIAB-node in the first message, to resolve a conflict between BAP addresses, and remove a redundant information element from the first message. This reduces transmission resource overheads.

S1302: The mIAB-DU sends the first message to the CU 1.

In this embodiment of this application, after receiving the first message, the CU 1 may determine a correspondence between the mIAB-DU and the mIAB-MT based on the identification information of the mIAB-DU and the first identification information of the mIAB-MT and/or the second identification information of the mIAB-MT in the first message. In this manner, the CU 1 may learn of the correspondence between the mIAB-DU and the mIAB-MT, so that the CU 1 manages the IAB-node.

According to this solution, the CU 1 may receive the first message that is sent by the mIAB-DU and that includes the identification information of the mIAB-DU and identification information of the mIAB-MT, and therefore the CU 1 may determine the correspondence between the mIAB-DU and the mIAB-MT based on the identification information of the mIAB-DU and the identification information of the mIAB-MT, without depending on the BAP address sent by the mIAB-DU to determine the correspondence between the mIAB-DU and the mIAB-MT. This is more flexible.

### Embodiment 4

It can be learned from the foregoing descriptions of migration of an mIAB-DU that, the migration of the mIAB-DU actually means that an mIAB-node splits the mIAB-DU into two logical DUs, for example, the mIAB-DU 1 and the mIAB-DU 2 shown in FIG. 10. In some scenarios, when the mIAB-DU is migrated, UE is handed over from the mIAB-DU 1 to the mIAB-DU 2. In this case, the CU 1 needs to initiate, to the CU 2, an IAB transport migration management procedure associated with an MT, for requesting to set up inter-topology user plane transmission. In this case, the CU 1 needs to store a correspondence between the mIAB-DU and an mIAB-MT before initiating the procedure.

In some implementations, the CU 1 may not need to initiate the IAB transport migration management procedure to the CU 2. For example, a CU 3 initiates the IAB transport migration management procedure to the CU 2. Alternatively, the CU 2 actively configures a resource, and another donor-CU does not need to initiate the procedure. In this case, the CU 1 does not need to learn of the correspondence between the mIAB-DU and the mIAB-MT, and the CU 1 only needs to determine that there is an mIAB-DU in a control range of the CU 1, and does not need to determine a specific mIAB-MT corresponds to the mIAB-DU. However, when the mIAB-MT is migrated from the CU 2 to the CU 1, because there is no donor-CU that manages the mIAB-MT, the CU 1 needs to know the correspondence between the mIAB-DU and the mIAB-MT.

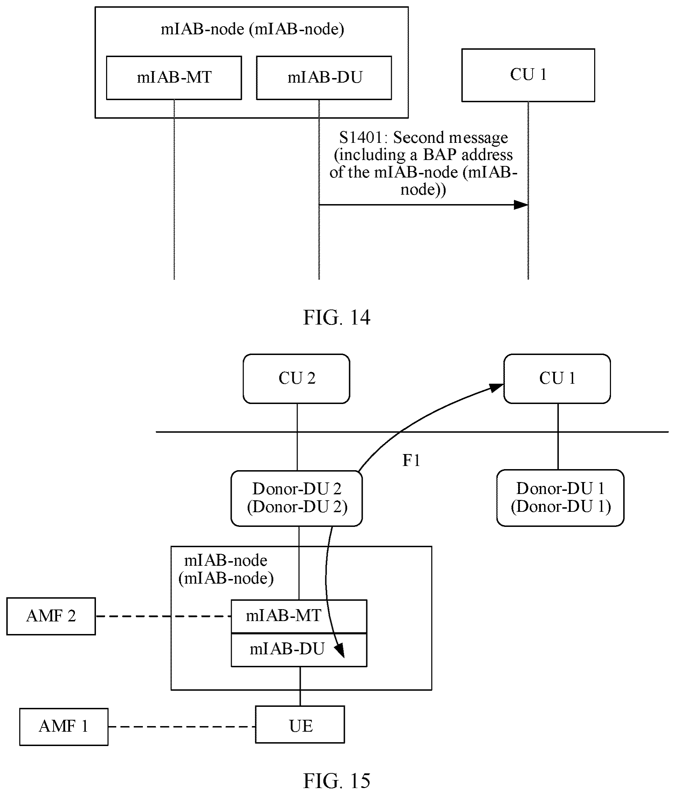

In view of this, an embodiment of this application provides a communication method, to resolve a problem that, when the mIAB-MT is migrated to a donor-CU (the CU 1) of the mIAB-DU, the CU 1 cannot determine the correspondence between the mIAB-DU and the mIAB-MT. FIG. 14 is a flowchart of a communication method according to an embodiment of this application. Refer to FIG. 14. The method includes the following steps.

S1401: An mIAB-DU sends a second message to a CU 1, where the second message includes a BAP address of an mIAB-node, and the BAP address is used for communication of the mIAB-node in a topology managed by the CU 1.

Optionally, there is an F1 interface connection between the mIAB-DU and the CU 1. In other words, the CU 1 is a donor-CU connected to the mIAB-DU.

In this embodiment of this application, the second message sent by the mIAB-node to the CU 1 includes the BAP address of the mIAB-node, and the BAP address of the mIAB-node may be configured by the CU 1 and delivered to an mIAB-MT. In this case, after receiving the second message, the CU 1 may determine a correspondence between the mIAB-DU and the mIAB-MT based on the BAP address of the mIAB-node.

Optionally, the second message may be a configuration update message. For example, the second message may be a gNB-DU configuration update message.

In addition, it can be learned from the foregoing descriptions that migration of the mIAB-MT may be decoupled from migration of the mIAB-DU. In this case, a donor-CU connected to the mIAB-MT may be different from the donor-CU connected to the mIAB-DU. For example, FIG. 15 is a diagram of a scenario in which an mIAB-MT and an mIAB-DU are connected to different donor-CUs according to an embodiment of this application. Refer to FIG. 15. A donor-CU connected to the mIAB-DU is a CU 1, a donor-CU connected to the mIAB-MT is a CU 2, UE 1 is UE managed by the mIAB-DU, a first core network element is a core network element serving the UE, and FIG. 15 shows an example in which the first core network element is an AMF 1. A second core network element is a core network element serving an MT, and FIG. 15 shows an example in which the second core network element is an AMF 2. Embodiment 5 to Embodiment 8 are embodiments based on the scenario shown in FIG. 15. It should be noted that, for ease of description, a connection between an IAB-node and a donor-DU in FIG. 15 is merely an example but not a limitation, during implementation, there may be one or more hops of network nodes between the IAB-node and the donor-DU. This is not limited in embodiments of this application.

It may be understood that, that the donor-CU connected to the mIAB-MT is different from the donor-CU connected to the mIAB-DU may be caused because the mIAB-MT is migrated but the mIAB-DU is not migrated, the mIAB-DU is migrated but the mIAB-MT is not migrated, or a target donor-CU to which the mIAB-DU is to be migrated is different from a target donor-CU to which the mIAB-MT is to be migrated. This is not limited in this embodiment of this application.

When the donor-CU of the mIAB-MT is different from the donor-CU of the mIAB-DU, the CU 1 reports user location information (user location information, ULI) of the UE to the AMF 1, and the CU 1 further needs to report, to the AMF 1 as additional ULI of the UE, indication information indicating ULI of the mIAB-MT, to improve accuracy of location information. In the scenario shown in FIG. 15, the donor-CU of the mIAB-MT is the CU 2. In this case, the CU 1 cannot learn of the ULI of the mIAB-MT, and cannot report, to the AMF 1, the indication information indicating the ULI of the mIAB-MT. Based on this problem, an embodiment of this application provides a communication method, to resolve a problem that the CU 1 cannot report, to the AMF 1, the indication information indicating the ULI of the mIAB-MT. The following describes communication methods provided in Embodiment 5 to Embodiment 8 of this application.

### Embodiment 5

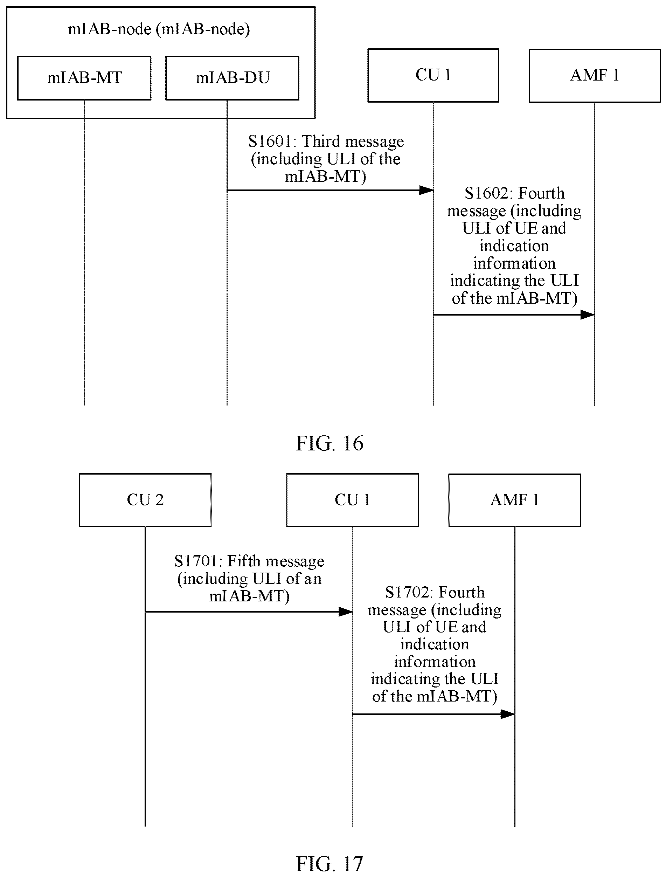

FIG. 16 is a flowchart of a communication method according to an embodiment of this application. Refer to FIG. 16. The method includes the following steps.

S1601: An mIAB-DU sends a third message to a CU 1, where the third message includes ULI of the mIAB-MT.

In an optional implementation, the mIAB-DU may obtain the ULI of the mIAB-MT through internal interaction of a relay node.

S1602: The CU 1 sends a fourth message to an AMF 1, where the fourth message includes ULI of UE and indication information indicating the ULI of the mIAB-MT.

Optionally, the fourth message may be a message used by the CU 1 to send context information of the UE to the AMF 1. The indication information that is in the fourth message and that indicates the ULI of the mIAB-MT may be the ULI of the mIAB-MT, or may be a relationship between the ULI of the mIAB-MT and the ULI of the UE.

In this manner, the mIAB-DU may send the ULI of the mIAB-MT to the CU 1, so that the CU 1 can learn of the ULI of the mIAB-MT and report, to the AMF 1, the indication information indicating the ULI of the mIAB-MT. This ensures accuracy of location information of the UE.

### Embodiment 6

FIG. 17 is a flowchart of a communication method according to an embodiment of this application. Refer to FIG. 17. The method includes the following steps.

S1701: A CU 2 sends a fifth message to a CU 1, where the fifth message includes ULI of an mIAB-MT.

In an optional implementation, the CU 2 may send the fifth message to the CU 1 through IP layer interaction.

S1702: The CU 1 sends a fourth message to an AMF 1, where the fourth message includes ULI of UE and indication information indicating the ULI of the mIAB-MT.

Optionally, the fourth message may be a message used by the CU 1 to send context information of the UE to the AMF 1. The indication information that is in the fourth message and that indicates the ULI of the mIAB-MT may be the ULI of the mIAB-MT, or may be a relationship between the ULI of the mIAB-MT and the ULI of the UE.

In this manner, the CU 2 may send the ULI of the mIAB-MT to the CU 1, so that the CU 1 can learn of the ULI of the mIAB-MT and report, to the AMF 1, the indication information indicating the ULI of the mIAB-MT. This ensures accuracy of location information of the UE.

### Embodiment 7

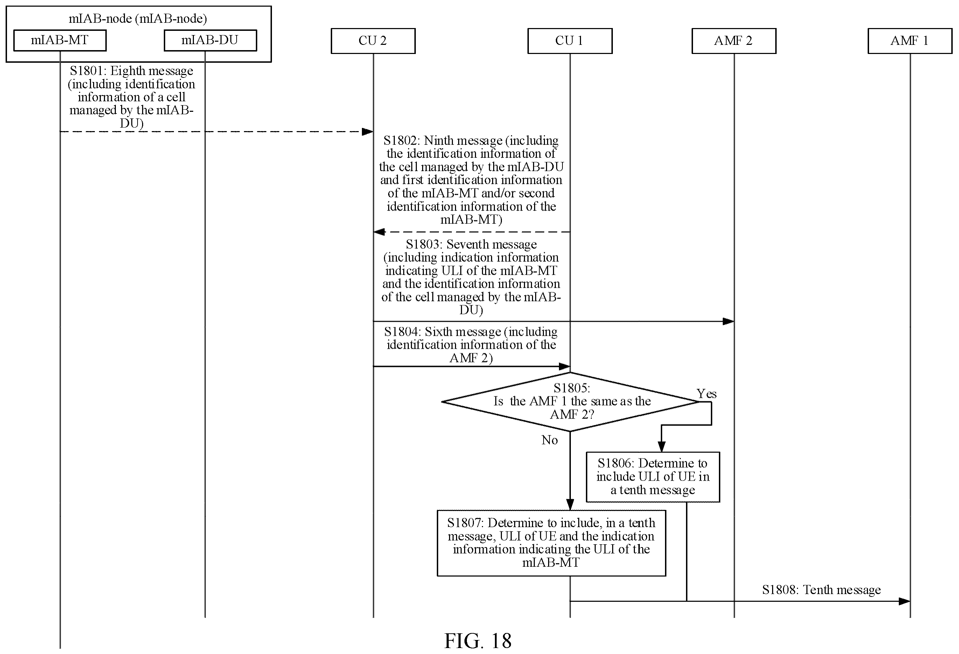

FIG. 18 is a flowchart of a communication method according to an embodiment of this application. Refer to FIG. 18. The method includes the following steps.

S1801: An mIAB-MT sends an eighth message to a CU 2, where the eighth message includes identification information of a cell managed by an mIAB-DU.

Optionally, the identification information of the cell may include a cell global identifier (cell global identifier, CGI) and/or a tracking area identity (tracking area identity, TAI).

S1802: A CU 1 sends a ninth message to the CU 2, where the ninth message includes the identification information of the cell managed by the IAB-DU, and the ninth message further includes first identification information of the mIAB-MT and/or second identification information of the mIAB-MT.

Optionally, the identification information of the cell may include the CGI and/or the TAI. The first identification information of the mIAB-MT is identification information for identifying the mIAB-MT at the CU 1. For example, the first identification information of the mIAB-MT may be a UE XnAP ID of the mIAB-MT served by the CU 1. The second identification information of the mIAB-MT is identification information for identifying the mIAB-MT at the CU 2. For example, the second identification information of the mIAB-MT may be a UE XnAP ID of the mIAB-MT served by the CU 2. The first identification information of the mIAB-MT and/or the second identification information of the mIAB-MT in the ninth message may indicate the IAB-MT corresponding to the IAB-DU.

It should be noted that, in some embodiments, either S1801 or S1802 may be performed. For example, in some embodiments, S1801 may be performed without S1802, S1802 may be performed without S1801, or S1801 and S1802 may be performed. In addition, an execution sequence of S1801 and S1802 is not limited in this embodiment of this application.

S1803: The CU 2 sends a seventh message to an AMF 2, where the seventh message includes indication information indicating ULI of the mIAB-MT and the identification information of the cell managed by the mIAB-DU.

Optionally, the indication information that is in the seventh message and that indicates the ULI of the mIAB-MT may be ULI of the mIAB-MT, or may be a relationship between the ULI of the mIAB-MT and ULI of UE.

In some implementations, the identification information of the cell managed by the mIAB-DU may be used as the ULI of the UE managed by the mIAB-DU. In this case, after receiving the indication information indicating the ULI of the mIAB-MT and the identification information of the cell managed by the DU, the AMF 2 may determine the identification information that is of the cell managed by the DU and that is associated with the indication information indicating the ULI of the mIAB-MT.

S1804: The CU 2 sends a sixth message to the CU 1, where the sixth message includes identification information of the AMF 2.

In this step, the CU 1 may determine that an AMF serving the IAB-MT is the AMF 2.

S1805: The CU 1 determines whether the AMF 1 and the AMF 2 are a same AMF; and if the AMF 1 and the AMF 2 are the same AMF, performs S1806; or if the AMF 1 and the AMF 2 are not the same AMF, performs S1807.

S1806: The CU 1 determines to include the ULI of the UE in a tenth message.

S1807: The CU 1 determines to include, in a tenth message, the ULI of the UE and the indication information indicating the ULI of the IAB-MT.

In this embodiment of this application, the CU 1 may determine whether the AMF 1 serving the UE and the AMF 2 serving the IAB-MT are the same AMF. When the AMF 1 and the AMF 2 are the same AMF, because the CU 2 has sent the seventh message to the AMF 2 in S1803, the AMF 2 knows the identification information that is of the cell managed by the DU and that is associated with the indication information indicating the ULI of the mIAB-MT. In this case, the CU 1 may determine to include the ULI of the UE in the tenth message. After receiving the tenth message, the AMF 2 may determine, based on the ULI of the UE and a relationship between the indication information indicating the ULI of the mIAB-MT and the identification information of the cell managed by the DU, the indication information that indicates the ULI of the mIAB-MT and that corresponds to the ULI of the UE, and therefore does not need to include, in the tenth message, the indication information indicating the ULI of the MT. When determining that the AMF 1 and the AMF 2 are not the same AMF, the CU 1 determines to include, in the tenth message, the ULI of the UE and the indication information indicating the ULI of the MT, to report, to the AMF 1, the ULI of the UE and the indication information indicating the ULI of the MT.

S1808: The CU 1 sends the tenth message to the AMF 1.

According to this solution, the CU 2 sends, to the AMF 2 once, the seventh message including the indication information indicating the ULI of the mIAB-MT and the identification information of the cell managed by the DU. When determining that the AMF 1 serving the UE and the AMF 2 are the same AMF, the CU 1 does not need to report, to the AMF 1, the ULI of the mIAB-MT or the indication information indicating the ULI of the mIAB-MT. This reduces signaling overheads and saves communication resources.

### Embodiment 8

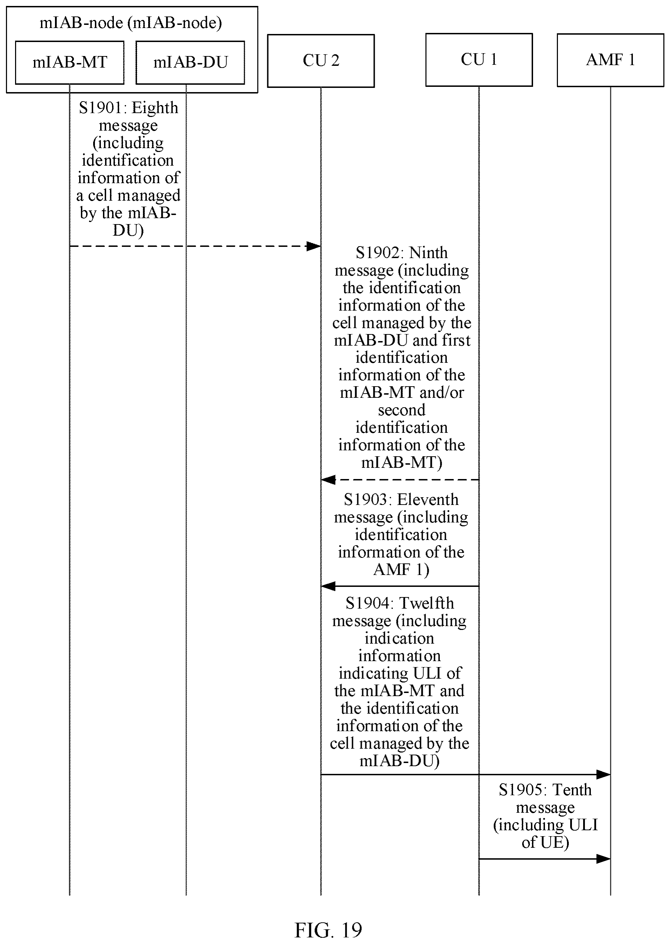

FIG. 19 is a flowchart of a communication method according to an embodiment of this application. Refer to FIG. 19. The method includes the following steps.

S1901: An mIAB-MT sends an eighth message to a CU 2, where the eighth message includes identification information of a cell managed by a DU.

Optionally, the identification information of the cell may include a cell global identifier (cell global identifier, CGI) and/or a tracking area identity (tracking area identity, TAI).

S1902: A CU 1 sends a ninth message to the CU 2, where the ninth message includes the identification information of the cell managed by the mIAB-DU, and the ninth message further includes first identification information of the mIAB-MT and/or second identification information of the mIAB-MT.

Optionally, the identification information of the cell may include the CGI and/or the TAI. The first identification information of the mIAB-MT is identification information for identifying the mIAB-MT at the CU 1. For example, the first identification information of the mIAB-MT may be a UE XnAP ID of the mIAB-MT served by the CU 1. The second identification information of the mIAB-MT is identification information for identifying the mIAB-MT at the CU 2. For example, the second identification information of the mIAB-MT may be a UE XnAP ID of the mIAB-MT served by the CU 2. The first identification information of the mIAB-MT and/or the second identification information of the mIAB-MT in the ninth message may indicate the IAB-MT corresponding to the IAB-DU.

It should be noted that, in some embodiments, either S1901 or S1902 may be performed. For example, in some embodiments, S1901 may be performed without S1902, S1902 may be performed without S1901, or S1901 and S1902 may be performed. In addition, an execution sequence of S1901 and S1902 is not limited in this embodiment of this application.

S1903: The CU 1 sends an eleventh message to the CU 2, where the eleventh message includes identification information of the AMF 1.

In an optional implementation, the CU 1 may send the identification information of the AMF 1 to the CU 2, so that the CU 2 can learn that an AMF serving UE is the AMF 1.

S1904: The CU 2 sends a twelfth message to the AMF 1 based on the identification information of the AMF 1, where the twelfth message includes indication information indicating ULI of the mIAB-MT and the identification information of the cell managed by the mIAB-DU.

In this embodiment of this application, the CU 2 may directly send, to the AMF 1, the indication information indicating the ULI of the mIAB-MT and the identification information of the cell managed by the mIAB-DU, so that the AMF 1 may store a relationship between the indication information indicating the ULI of the mIAB-MT and the identification information of the cell managed by the mIAB-DU.

S1905: The CU 1 sends a tenth message to the AMF 1, where the tenth message includes ULI of the UE.

In this embodiment of this application, the AMF 1 has received the twelfth message sent by the CU 2 in S1904. After receiving the tenth message sent by the CU 1, the AMF 1 may determine, based on the ULI of the UE in the tenth message and the relationship between the indication information indicating the ULI of the mIAB-MT and the identification information of the cell managed by the DU, the indication information that indicates the ULI of the mIAB-MT and that corresponds to the ULI of the UE, so that the CU 1 does not need to include, in the tenth message, the indication information indicating the ULI of the MT.

According to this solution, the CU 2 may send, to the AMF 1 serving the UE, the indication information indicating the ULI of the mIAB-MT and the identification information of the cell managed by the DU, so that the CU 1 does not need to report the ULI of the MT or the indication information indicating the ULI of the MT again. This ensures accuracy of location information of the UE, and reduces transmission resources.

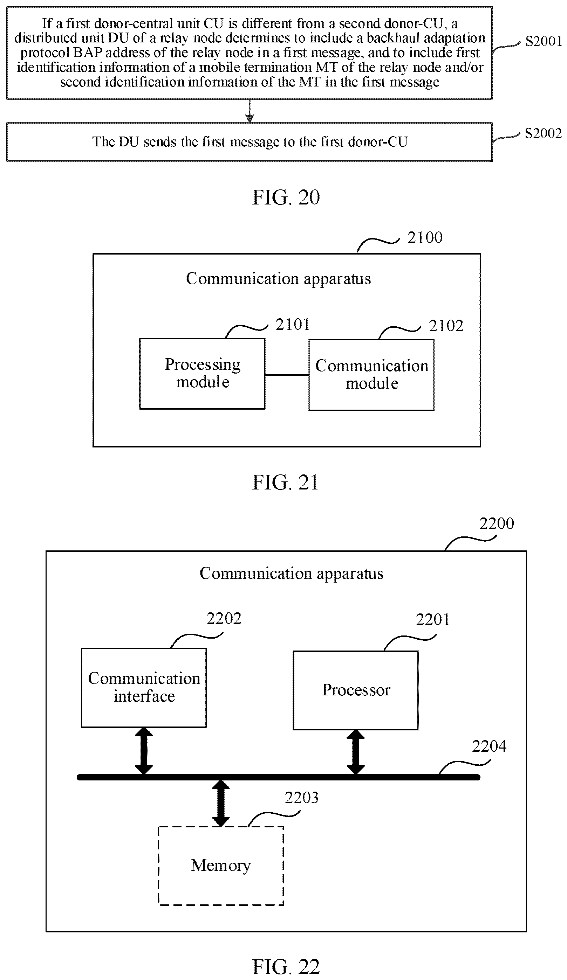

Based on the foregoing methods, this application further provides a communication method. The method may be performed by a relay node. FIG. 20 is a flowchart of a communication method according to this application. Refer to FIG. 20. The method includes the following steps.

S2001: If a first donor-central unit CU is different from a second donor-CU, a distributed unit DU of a relay node determines to include a backhaul adaptation protocol BAP address of the relay node in a first message, and to include first identification information of a mobile termination MT of the relay node and/or second identification information of the MT in the first message.

The first donor-CU is a target donor-CU to which the DU of the relay node is to be migrated, the second donor-CU is a donor-CU connected to the MT, the first message is for requesting to set up an interface connection between the DU and the first donor-CU, and the BAP address is used for communication of the relay node in a topology managed by the second donor-CU; and the first identification information is identification information for identifying the MT at the first donor-CU, and the second identification information is identification information for identifying the MT at the second CU.

S2002: The DU sends the first message to the first donor-CU.

It should be noted that, for specific implementation of the communication method shown in FIG. 20 in this application, refer to Embodiment 1 of this application. No repeated description is provided again.

It may be understood that, to implement functions in the foregoing embodiments, the donor node, the relay node, and the terminal include corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

FIG. 21 and FIG. 22 each are a diagram of a structure of a possible communication apparatus according to an embodiment of this application. These communication apparatuses may be configured to implement functions of the IAB-node in the foregoing method embodiments, or may be configured to implement functions of the donor-CUs in the foregoing embodiments, and therefore can also achieve beneficial effects of the foregoing method embodiments.

Refer to FIG. 21. The communication apparatus 2100 may include a processing module 2101 and a communication module 2102.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation on a receiving device side or a sending device side in the foregoing methods. A component configured to implement a receiving function in the communication module may be considered as a receiving unit, and a component configured to implement a sending function in the communication module may be considered as a sending unit. That is, the communication module includes the receiving unit and the sending unit.

When the communication apparatus 2100 is used in a relay device, the processing module 2101 may be configured to implement a processing function of the mIAB-node in the embodiments shown in FIG. 11 to FIG. 14 and the embodiments shown in FIG. 16 to FIG. 19. Optionally, when the communication apparatus 2100 is used in the relay device, the processing module may include a first processing module and a second processing module. The first processing module may be configured to implement a processing function of the mIAB-DU in the foregoing embodiments, and the second processing module may implement a processing function of the mIAB-MT in the foregoing embodiments. The communication module 2102 may be configured to implement receiving and sending functions of the mIAB-node in the embodiments shown in FIG. 11 to FIG. 14 and the embodiments shown in FIG. 16 to FIG. 19. Alternatively, the communication apparatus may be understood with reference to the descriptions and the possible designs in the eleventh aspect to the fourteenth aspect in the summary.

When the communication apparatus 2100 is used in a donor device, the processing module 2101 may be configured to implement a processing function of any donor-CU in the embodiments shown in FIG. 11 to FIG. 14 and the embodiments shown in FIG. 16 to FIG. 19. The communication module 2102 may be configured to implement receiving and sending functions of any donor-CU in the embodiments shown in FIG. 11 to FIG. 14 and the embodiments shown in FIG. 16 to FIG. 19. Alternatively, the communication apparatus may be understood with reference to the descriptions and the possible designs in the fifteenth aspect to the twentieth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely division into logical functions, and may be other division during actual implementation. In addition, functional modules in examples in embodiments of this application may be integrated into one processor, each of the functional modules may exist alone physically, or two or more functional modules may be integrated into one module. The integrated module may be implemented in a form of hardware, or may be implemented in a form of a software functional module.

As shown in FIG. 22, the communication apparatus 2200 may include a processor 2201 and a communication interface 2202. The processor 2201 and the communication interface 2202 are coupled to each other. It may be understood that the communication interface 2202 may be a transceiver or an input/ output interface. Optionally, the communication apparatus may further include a memory 2203, configured to: store instructions to be executed by the processor 2201, store input data needed for running instructions by the processor 2201, or store data generated after the processor 2201 runs instructions.

Optionally, refer to FIG. 22. The processor 2201, the communication interface 2202, and the memory 2203 are connected to each other by using a bus 2204. The bus 2204 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 22, but this does not mean that there is only one bus or only one type of bus.

When the communication apparatus 2200 is used in a relay device, the processor 2201 may be configured to implement a processing function of the mIAB-node in the embodiments shown in FIG. 11 to FIG. 14 and the embodiments shown in FIG. 16 to FIG. 19. Optionally, when the communication apparatus 2200 is used in the relay device, the processor may include a first processor and a second processor. The first processor may be configured to implement a processing function of the mIAB-DU in the foregoing embodiments, and the second processor may implement a processing function of the mIAB-MT in the foregoing embodiments. The communication interface 2202 may be configured to implement receiving and sending functions of the mIAB-node in the embodiments shown in FIG. 11 to FIG. 14 and the embodiments shown in FIG. 16 to FIG. 19. Alternatively, the communication apparatus may be understood with reference to the descriptions and the possible designs in the eleventh aspect to the fourteenth aspect in the summary.

When the communication apparatus 2200 is used in a donor device, the processor 2201 may be configured to implement a processing function of any donor-CU in the embodiments shown in FIG. 11 to FIG. 14 and the embodiments shown in FIG. 16 to FIG. 19. The communication interface 2202 may be configured to implement receiving and sending functions of any donor-CU in the embodiments shown in FIG. 11 to FIG. 14 and the embodiments shown in FIG. 16 to FIG. 19. Alternatively, the communication apparatus may be understood with reference to the descriptions and the possible designs in the fifteenth aspect to the twentieth aspect in the summary.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium or write information into the storage medium. Certainly, the storage medium may be a component of the processor. The processor and the storage medium may be disposed in the ASIC. In addition, the ASIC may be located in a base station or a terminal. Certainly, the processor and the storage medium may exist in a base station or terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or the functions according to embodiments of this application are all or partially implemented. The computer may be a general-purpose computer, a special-purpose computer, a computer network, a base station, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, wherein the method comprises:
if a first donor-central unit CU is different from a second donor-CU, determining, by a distributed unit DU of a relay node, to comprise a backhaul adaptation protocol BAP address of the relay node in a first message, and to comprise first identification information of a mobile termination MT of the relay node and/or second identification information of the MT in the first message, wherein the first donor-CU is a target donor-CU to which the DU of the relay node is to be migrated, the second donor-CU is a donor-CU connected to the MT, the first message is for requesting to set up an interface connection between the DU and the first donor-CU, and the BAP address is used for communication of the relay node in a topology managed by the second donor-CU; and the first identification information is identification information for identifying the MT at the first donor-CU, and the second identification information is identification information for identifying the MT at the second CU; and
sending, by the DU, the first message to the first donor-CU.

2. The method according to claim 1, wherein the first message further comprises identification information of the DU.

3. The method according to claim 1 or 2, wherein before sending, by the DU, the first message to the first donor-CU, the method further comprises:
receiving, by the relay node, the first identification information and/or the second identification information from the second donor-CU; or
receiving, by the relay node, the first identification information and/or the second identification information from a third donor-CU, wherein the third donor-CU is a source donor-CU from which the DU is to be migrated.

4. A communication method, wherein the method comprises:
if a first donor-central unit CU is different from a second donor-CU, determining, by a distributed unit DU of a relay node, to comprise identification information of the DU in a first message, and to comprise first identification information of a mobile termination MT of the relay node and/or second identification information of the MT in the first message, wherein the first donor-CU is a target donor-CU to which the DU of the relay node is to be migrated, the second donor-CU is a donor-CU connected to the MT, the first message is for requesting to set up an interface connection between the DU and the first donor-CU, and the BAP address is used for communication of the relay node in a topology managed by the second donor-CU; and the first identification information is identification information for identifying the MT at the first donor-CU, and the second identification information is identification information for identifying the MT at the second donor-CU; and
sending, by the DU, the first message to the first donor-CU.

5. The method according to claim 4, wherein the method further comprises:
determining, by the DU of the relay node, not to comprise the backhaul adaptation protocol BAP address of the relay node in the first message.

6. The method according to claim 4 or 5, wherein before sending, by the DU, the first message to the first donor-CU, the method further comprises:
receiving, by the relay node, the first identification information and/or the second identification information from the second donor-CU; or
receiving, by the relay node, the first identification information and/or the second identification information from a third donor-CU, wherein the third donor-CU is a source donor-CU from which the DU is to be migrated.

7. A communication method, wherein the method comprises:
if a first donor-central unit CU is different from a second donor-CU, determining, by a distributed unit DU of a relay node, not to comprise a backhaul adaptation protocol BAP address of the relay node in a first message, wherein the first donor-CU is a target donor-CU to which the DU of the relay node is to be migrated, the second donor-CU is a donor-CU connected to a mobile termination MT of the relay node, the first message is for requesting to set up an interface connection between the DU and the first donor-CU, and the BAP address is used for communication of the relay node in a topology managed by the second donor-CU; and
sending, by the DU, the first message to the first donor-CU.

8. The method according to claim 7, wherein the method further comprises:
if the first donor-CU is the same as the second donor-CU, determining, by the DU, to comprise the BAP address of the relay node in the first message.

9. A communication method, wherein the method further comprises:
sending, by a distributed unit DU of the relay node, a second message to a first donor-central unit CU, wherein the second message comprises a backhaul adaptation protocol BAP address of the relay node, and the BAP address is used for communication of the relay node in a topology managed by the first donor-CU, wherein there is an F1 interface connection between the DU of the relay node and the first donor-CU.

10. The method according to claim 9, wherein the second message is a configuration update message.

11. A communication method, wherein the method comprises:
receiving, by a first donor-central unit CU, a third message sent by a distributed unit DU of a relay node, wherein the third message comprises user location information ULI of a mobile termination MT of the relay node, and the first donor-CU is a donor-CU connected to the DU; and
sending, by the first donor-CU, a fourth message to a first core network element, wherein the fourth message comprises ULI of UE and indication information indicating the ULI of the MT, the first core network element is a core network element serving the UE, and the UE is UE managed by the DU.

12. A communication method, wherein the method comprises:
receiving, by a first donor-central unit CU, a fifth message sent by a second donor-CU, wherein the fifth message comprises user location information ULI of a mobile termination MT of a relay node, the first donor-CU is a donor-CU connected to the DU, and the second donor-CU is a donor-CU connected to the MT; and
sending, by the first donor-CU, a fourth message to a first core network element, wherein the fourth message comprises ULI of UE and indication information indicating the ULI of the MT, the first core network element is a core network element serving the UE, and the UE is UE managed by the DU.

13. A communication method, wherein the method comprises:
sending, by a second donor-central unit CU, a sixth message to a first donor-CU, wherein the sixth message comprises identification information of a second core network element, the first donor-CU is a donor-CU connected to a distributed unit DU of a relay node, the second donor-CU is a donor-CU connected to a mobile termination MT of the relay node, and the second core network element is a core network element serving the MT; and
sending, by the second donor-CU, a seventh message to the second core network element, wherein the seventh message comprises indication information indicating user location information ULI of the MT and identification information of a cell managed by the DU.

14. The method according to claim 13, wherein before sending, by the second donor-CU, the sixth message to the first donor-CU, the method further comprises:
receiving, by the second donor-CU, an eighth message sent by the MT, wherein the eighth message comprises the identification information of the cell managed by the DU; or
receiving, by the second donor-CU, a ninth message sent by the first donor-CU, wherein the ninth message comprises the identification information of the cell managed by the DU, and the ninth message further comprises first identification information of the MT and/or second identification information of the MT, wherein
the first identification information is identification information for identifying the MT at the first donor-CU, and the second identification information is identification information for identifying the MT at the second donor-CU.

15. The method according to claim 13 or 14, wherein the identification information of the cell comprises a cell global identifier CGI and/or a tracking area identity TAI.

16. A communication method, wherein the method comprises:
receiving, by a first donor-central unit CU, a sixth message sent by a second donor-CU, wherein the sixth message comprises an identifier of a second core network element, the first donor-CU is a donor-CU connected to a distributed unit DU of a relay node, the second donor-CU is a donor-CU connected to a mobile termination MT of the relay node, and the second core network element is a core network element serving the MT;
if the second core network element and a first core network element are a same core network element, determining, by the first donor-CU, to comprise user location information ULI of UE in a tenth message, wherein the first core network element is a core network element serving the UE, and the UE is UE managed by the DU; or
if the second core network element and the first core network element are not the same core network element, determining, by the first donor-CU, to comprise, in the tenth message, the user location information ULI of the UE and indication information indicating ULI of the MT; and
sending, by the first donor-CU, the tenth message to the first core network element.

17. The method according to claim 16, wherein before receiving, by the first donor-CU, the sixth message sent by the second donor-CU, the method further comprises:
sending, by the first donor-CU, a ninth message to the second donor-CU, wherein the ninth message comprises identification information of a cell managed by the DU, and the ninth message further comprises first identification information of the MT and/or second identification information of the MT, wherein the first identification information is identification information for identifying the MT at the first CU, and the second identification information is identification information for identifying the MT at the second CU.

18. The method according to claim 16 or 17, wherein the identification information of the cell comprises a cell global identifier CGI and/or a tracking area identity TAI.

19. A communication method, wherein the method comprises:
receiving, by a second donor-central unit CU, an eleventh message sent by a first donor-CU, wherein the eleventh message comprises identification information of a first core network element, wherein the second donor-CU is a donor-CU connected to a mobile termination MT of a relay node, the first donor-CU is a donor-CU connected to a distributed unit DU of the relay node, the first core network element is a core network element serving UE, and the UE is UE managed by the DU; and
sending, by the second donor-CU, a twelfth message to the first core network element based on the identification information of the first core network element, wherein the twelfth message comprises indication information indicating user location information ULI of the MT and identification information of a cell managed by the DU.

20. The method according to claim 19, wherein before sending, by the second donor-CU, the twelfth message to the first core network element based on an identifier of the first core network element, the method further comprises:
receiving, by the second donor-CU, an eighth message sent by the MT, wherein the eighth message comprises the identification information of the cell managed by the DU; or
receiving, by the second donor-CU, a ninth message sent by the first donor-CU, wherein the ninth message comprises the identification information of the cell managed by the DU, and the ninth message further comprises first identification information of the MT and/or second identification information of the MT, wherein
the first identification information is identification information for identifying the MT at the first donor-CU, and the second identification information is identification information for identifying the MT at the second donor-CU.

21. The method according to claim 19 or 20, wherein the identification information of the cell comprises a cell global identifier CGI and/or a tracking area identity TAI.

22. A communication method, wherein the method comprises:
sending, by a first donor-central unit CU, an eleventh message to a second donor-CU, wherein the eleventh message comprises identification information of a first core network element, wherein the second donor-CU is a donor-CU connected to a mobile termination MT of a relay node, the first donor-CU is a donor-CU connected to a distributed unit DU of the relay node, the first core network element is a core network element serving UE, and the UE is UE managed by the DU; and
sending, by the first donor-CU, a tenth message to the first core network element, wherein the tenth message comprises user location information ULI of the UE.

23. A communication apparatus, comprising a transceiver and a processor, wherein
the transceiver is used by the apparatus to perform communication; and
the processor is configured to run a computer program stored in a memory, to enable the communication apparatus to perform the communication method according to any one of claims 1 to 3, the communication method according to any one of claims 4 to 6, the communication method according to claim 7 or 8, the communication method according to claim 9 or 10, the communication method according to claim 11, the communication method according to claim 12, the communication method according to any one of claims 13 to 15, the communication method according to any one of claims 16 to 18, the communication method according to any one of claims 19 to 21, or the communication method according to claim 22.

24. A computer program product, comprising a computer program, wherein when the computer program is executed by a processor, the communication method according to any one of claims 1 to 3 is implemented, the communication method according to any one of claims 4 to 6 is implemented, the communication method according to claim 7 or 8 is implemented, the communication method according to claim 9 or 10 is implemented, the communication method according to claim 11 is implemented, the communication method according to claim 12 is implemented, the communication method according to any one of claims 13 to 15 is implemented, the communication method according to any one of claims 16 to 18 is implemented, the communication method according to any one of claims 19 to 21 is implemented, or the communication method according to claim 22 is implemented.

25. A computer-readable storage medium, wherein the storage medium stores a computer program or instructions, and when the computer program or the instructions are executed by a processor, the communication method according to any one of claims 1 to 3 is implemented, the communication method according to any one of claims 4 to 6 is implemented, the communication method according to claim 7 or 8 is implemented, the communication method according to claim 9 or 10 is implemented, the communication method according to claim 11 is implemented, the communication method according to claim 12 is implemented, the communication method according to any one of claims 13 to 15 is implemented, the communication method according to any one of claims 16 to 18 is implemented, the communication method according to any one of claims 19 to 21 is implemented, or the communication method according to claim 22 is implemented.
